# EUROPÄISCHE PATENTANMELDUNG

(11) **EP 4 455 962 A1**
(43) Veröffentlichungstag der Anmeldung: **30.10.2024**
(21) Anmeldenummer: 24172458.2
(22) Anmeldetag: 25.04.2024
(51) Int. Cl.: G06Q 10/083, G06Q 50/60, G07C 9/00, A47G 29/12, A47G 29/14, G07B 17/00, G07F 11/62, G07F 17/26

(54) **MODUL ZUM BESTIMMEN EINER VERSANDOPTION**

(30) Priorität: 26.04.2023 DE 102023110656
(71) Anmelder: Deutsche Post AG, 53113 Bonn (DE)
(72) Erfinder: KAMB, Dennis, 51503 Rösrath (DE); HORMANN, Ralf, 53229 Bonn (DE); DAUTZ, Christoph, 53225 Bonn (DE)
(74) Vertreter: Cohausz & Florack

(57) **Zusammenfassung**

Es wird unter anderem ein Verfahren offenbart, wobei das Verfahren umfasst:
- Bewirken des Öffnens eines verriegelbaren Messmoduls;
- Erhalten zumindest eines Messparameters einer in das Messmodul eingelegten Sendung; und
- Bereitstellen, zumindest teilweise basierend auf dem erhaltenen zumindest einen Messparameter, einer Messinformation, wobei die Messinformation zumindest ein Gewicht und/oder eine Größe der in das Messmodul eingelegten Sendung repräsentiert und wobei zumindest teilweise basierend auf der bereitgestellten Messinformation zumindest eine Versandoption für ein Versenden der Sendung bestimmt wird.

## Beschreibung

### Technisches Gebiet

Beispielhafte Ausführungsformen der vorliegenden Offenbarung betreffen Verfahren, Vorrichtungen, Systeme und Computerprogramme zum Bereitstellen einer Messinformation, wobei zumindest teilweise basierend auf der bereitgestellten Messinformation zumindest eine Versandoption für ein Versenden einer Sendung bestimmt wird.

### Hintergrund

Fachanlagen finden beispielsweise in Form von Schließfach- oder Paketfachanlagen vielfältig Anwendung. Ein Beispiel für eine Fachanlage ist zum Beispiel eine Paketstation, welche ein Benutzer zum Empfangen oder Versenden von Postsendungen liefern lassen kann. Ein solches Versenden umfasst üblicherweise das Einlagern einer zu versendenden Sendung in die Fachanlage, wobei der Benutzer zum Beispiel die Sendung in ein Fach der Fachanlage einlegt und das Fach anschließend verschlossen wird. Bei diesem Vorgang des Einlagerns der Sendung kann es nachteilig sein, dass ein oder mehrere Eigenschaften der Sendung sowie beispielsweise mögliche Benutzerpräferenzen, von denen zum Beispiel das Versenden der Sendung abhängen kann, nicht berücksichtigt werden.

### Zusammenfassung einiger beispielhafter Ausführungsformen der Erfindung

Die vorliegend offenbarte Erfindung hat sich daher unter anderem die Aufgabe gestellt, beispielsweise im Rahmen der Einlagerung einer Sendung in eine Fachanlage eine Messinformation bereitzustellen, wobei zumindest teilweise basierend auf der bereitgestellten Messinformation zumindest eine Versandoption für ein Versenden der Sendung bestimmt wird.

Gemäß einem ersten beispielhaften Aspekt der vorliegenden Offenbarung wird ein Verfahren offenbart, das Folgendes umfasst:
- Bewirken des Öffnens eines verriegelbaren Messmoduls;
- Erhalten zumindest eines Messparameters einer in das Messmodul eingelegten Sendung; und
- Bereitstellen, zumindest teilweise basierend auf dem erhaltenen zumindest einen Messparameter, einer Messinformation, wobei die Messinformation zumindest ein Gewicht und/oder eine Größe der in das Messmodul eingelegten Sendung repräsentiert und wobei zumindest teilweise basierend auf der bereitgestellten Messinformation zumindest eine Versandoption für ein Versenden der Sendung bestimmt wird.

Zum Beispiel kann das Verfahren gemäß dem ersten Aspekt zumindest teilweise oder vollständig von einer Steuereinheit des Messmodul durchgeführt werden.

Gemäß einem zweiten beispielhaften Aspekt der vorliegenden Offenbarung wird ein Verfahren offenbart, das Folgendes umfasst:
- Erhalten zumindest einer Messinformation, wobei die Messinformation zumindest ein Gewicht und/oder eine Größe einer in ein verriegelbares Messmodul eingelegten Sendung repräsentiert; und
- Bestimmen, zumindest teilweise basierend auf der erhaltenen Messinformation, zumindest einer Versandoption für ein Versenden der Sendung.

Zum Beispiel kann das Verfahren gemäß dem zweiten Aspekt zumindest teilweise oder vollständig von einer Steuereinheit einer Fachanlage oder von einem Backend-Server durchgeführt werden.

Gemäß jedem dieser Aspekte der vorliegenden Offenbarung werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt der Erfindung veranlassen, wenn das Computerprogramm auf dem Prozessor läuft Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung, eingerichtet zur Ausführung und/oder Steuerung des Verfahrens gemäß dem jeweiligen Aspekt der Erfindung oder umfassend jeweilige Mittel zur Ausführung und/oder Steuerung der Schritte des Verfahrens gemäß dem jeweiligen Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem jeweiligen Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Ein Messmodul umfasst beispielsweise zumindest ein Fach eingerichtet zur Aufnahme von zumindest einer Sendung (z.B. einem Brief, Paket oder Päckchen). Ein solches Fach des Messmoduls ist verriegelbar (z.B. verschließbar), beispielsweise mittels einer Tür oder Klappe. Zum Beispiel handelt es sich bei dem Fach des Messmoduls um ein im Wesentlichen quaderförmiges Aufnahmebehältnis, welches an einer oder mehreren Seiten mit Türen oder Klappen versehen ist.

Eine Verriegelbarkeit des Messmoduls kann zum Beispiel gegeben sein, indem das Fach des Messmoduls mit einem Schloss versehen ist, um den Zugang von Benutzern zu dem Fach kontrollieren zu können. Ein solches Schloss kann beispielsweise im oder am Fach angeordnet sein, beispielsweise an einer Tür (z.B. auch in Form einer Klappe) des Fachs. Wenn das Schloss nicht an der Tür angeordnet ist (also beispielsweise an einer Seitenwand des Fachs), wirkt es beispielsweise mit der Tür zusammen, indem beispielsweise ein Riegel in eine Öffnung der Tür eingeführt bzw. wieder herausgezogen wird. Das Schloss eines Fachs kann beispielsweise standardmäßig in eine Verriegelungsposition zurückkehren und dann beispielsweise nur zur Entriegelung ansteuerbar sein. Nach erfolgter Entriegelung des Schlosses kann dann beispielsweise die Tür des Fachs geöffnet werden. Da das Schloss automatisch in die Verriegelungsposition zurückkehrt, kann eine Verriegelung des Fachs durch Schließen der Tür erzielt werden, beispielsweise in dem beim Schließen der Tür eine Fallenfunktion des Schlosses ausgenutzt wird.

Zum Beispiel kann das Fach des Messmoduls entweder offen oder geschlossen sein. Im offenen Zustand des Fachs ist das Schloss des Fachs entriegelt Die Tür des Fachs kann dann beispielsweise ohne Gewaltanwendung durch eine Person geöffnet werden oder steht offen. Im geschlossenen Zustand des Fachs ist das Schloss des Fachs hingegen verriegelt Die Tür des Fachs kann dann beispielsweise nicht mehr ohne Gewaltanwendung durch eine Person geöffnet werden, die nicht zur Öffnung berechtigt ist.

Das Schloss des Fachs des Messmoduls ist beispielsweise steuerbar, insbesondere in elektronischer Form. Insbesondere kann zumindest der Prozess des Schließens (z.B. des Verriegelns) und/oder des Öffnens (z.B. des Entriegelns) des Schlosses gesteuert (z.B. bewirkt) werden. Die Steuerung des Schlosses eines Fachs kann beispielsweise durch eine vom Messmodul umfassten Schlosssteuereinheit erfolgen, wobei die Schlosssteuereinheit des Messmoduls beispielsweise durch eine übergeordnete Steuereinheit des Messmoduls gesteuert wird. Eine solche Steuereinheit des Messmoduls kann beispielsweise neben der Ansteuerung des Schlosssteuereinheit außerdem feststellen, ob eine erhaltene Zugangsinformation zum Zugang zu dem Fach berechtigt, und dementsprechend Zugang zu dem Fach gewähren (z.B. durch Entriegelung der Tür des Fachs) oder verweigern (z.B. indem keine Entriegelung der Tür des Fachs erfolgt).

Das Messmodul umfasst zum Beispiel neben zumindest einem Fach und einer Steuereinheit zumindest einen Sensor, welcher dazu eingerichtet ist, zumindest einen Messparameter einer in das Messmodul (z.B. in das Fach des Messmoduls) eingelegten Sendung zu erfassen. Insbesondere wird der zumindest eine Messparameter der eingelegten Sendung erfasst, während sich diese Sendung in dem Messmodul befindet, sodass dieser Messparameter beispielsweise der eingelegten Sendung zuordenbar ist. Ein Messparameter einer in das Messmodul eingelegten Sendung kann dabei als ein Messparameter verstanden werden, welcher beispielsweise von der eingelegten Sendung (z.B. von Eigenschaften dieser Sendung) abhängt und sich beispielweise durch Eigenschaften dieser Sendung ergibt und/oder durch diese beeinflusst wird. Ein Messparameter einer Sendung hängt zum Beispiel von einer Größe (z.B. Länge, Breite, Tiefe und/oder Volumen) und/oder von einem Gewicht der Sendung ab und ergibt sich beispielsweise aus dieser Größe und diesem Gewicht. Somit ist zum Beispiel (z.B. bei Verarbeitung des Messparameters bspw. mit weiteren Informationen wie bspw. weiteren Messparametern der Sendung) ein Bestimmen der Größe und/oder des Gewichts der Sendung zumindest teilweise basierend auf dem Messparameter möglich. Zum Beispiel repräsentiert ein Messparameter der Sendung Information über ein Gewicht und/oder eine Größe der eingelegten Sendung. Ein Messparameter einer Sendung kann beispielsweise ein elektrisches Signal und/oder eine elektrisch übertragene Information sein, welche eine Größe und/oder ein Gewicht der Sendung repräsentiert, sodass die Größe und/oder das Gewicht der Sendung zumindest teilweise basierend auf dem Messparameter bestimmt werden kann.

Der zumindest eine Sensor des Messmodul kann in einem Beispiel durch einen Gewichtssensor gegeben sein, wobei der Gewichtssensor Teil einer im Fach des Messmoduls angeordneten elektronischen Waage sein kann. Beispielsweise ist eine solche Waage in den Boden des Fachs des Messmoduls eingelassen, sodass das Gewicht einer Sendung erfasst wird, wenn sich diese Sendung in dem Fach des Messmoduls befindet. In diesem Beispiel zeigt der erfasste Messparameter der eingelegten Sendung in Form eines von der elektronischen Waage ausgegebenen elektrischen Signals das Gewicht der eingelegten Sendung an.

Alternativ oder zusätzlich zum einem Gewichtssensor kann das Messmodul weitere Sensoren zum Erfassen eines Messparameters einer Sendung umfassen. Zum Beispiel umfasst das Messmodul einen oder mehrere optische oder optoelektronische Sensoren, welche Information bezüglich der Größe einer in das Fach des Messmoduls eingelegten Sendung erfassen. Dabei kann beispielsweise mittels eines Lichtsenders (z.B. eine Leuchtdiode oder einer Laserdiode) und eines Lichtempfängers (z.B. ein lichtempfindlicher Widerstand oder einer Fotodiode) eine Lichtschranke innerhalb des Fachs des Messmoduls realisiert werden, sodass zum Beispiel eine Unterbrechung eines Lichtstrahls der Lichtschranke eine Größe einer in das Fach eingelegten Sendung anzeigt Sind Lichtsender und Lichtempfänger beispielsweise auf einer bestimmten Höhe im Fach des Messmoduls angeordnet, zeigt eine Unterbrechung des Lichtstrahls beispielsweise an, dass eine Höhe der eingelegten Sendung mindestens so groß wie die Höhe ist, auf der Lichtsender und Lichtempfänger angeordnet sind. Der Messparameter der eingelegten Sendung kann zum Beispiel ein Fotostrom des Lichtempfängers sein und eine untere Grenze der Höhe der eingelegten Sendung anzeigen.

In einem weiteren Beispiel kann das Messmodul eine oder mehrere Kameras umfassen, die jeweils ein oder mehrere Bilder (z.B. mit deren Bildinformationen als beispielhafte Messparameter) einer in das Fach des Messmoduls eingelegten Sendung erfassen, wobei beispielsweise eine Auswertung des einen oder der mehreren Bilder ein Bestimmen einer Größe der in das Fach eingelegten Sendung ermöglicht

In weiteren Beispielen kann das Messmodul weitere Sensoren (z.B. magnetische, kapazitive, und/oder induktive Sensoren) umfassen, welche zum Erfassen eines Messparameters einer in das Fach des Messmoduls eingelegten Sendung eingerichtet sind.

Der zumindest eine Sensor des Messmoduls kann beispielweise von der Steuereinheit des Messmoduls gesteuert (z.B. kontrolliert oder angetrieben) werden. Zum Beispiel ist der zumindest eine Sensor drahtlos oder drahtgebunden mit der Steuereinheit des Messmoduls verbunden, sodass die Steuereinheit beispielsweise den zumindest einen Sensor (z.B. mittels eines elektrischen Signals) veranlassen kann, einen Messparameter erfassen. Des Weiteren kann der zumindest eine Sensor beispielsweise einen erfassten Messparameter (z.B. mittels eines elektrischen Signals) an die Steuereinheit des Messmoduls übertragen, wobei die Steuereinheit den erhaltenen Messparameter zum Beispiel verarbeitet und eine Messinformation basierend auf dem erhaltenen Messparameter bestimmt

Des Weiteren soll beispielsweise verstanden werden, dass das Messmodul (z.B. das Fach, die Steuereinheit und/oder der zumindest eine Sensor des Messmoduls) für einen dauerhaften Außeneinsatz konzipiert ist. Demnach kann das Messmodul zum Beispiel durch besondere Schutzmaßnahmen dazu eingerichtet sein, beispielsweise Umwelteinflüssen (z.B. wetterbedingte Feuchtigkeit, Hitze und Kälte) oder Vandalismus (z.B. mutwillige Beschädigung oder Manipulation des Messmoduls) zu widerstehen. Beispielsweise kann ein Schloss des Fachs des Messmoduls besonders sicher oder eine Tür des Fachs des Messmoduls zum wasserdichten Verschließen des Fachs ausgestaltet sein.

Die Steuereinheit des Messmoduls umfasst zum Beispiel eine oder mehrere Kommunikationsschnittstellen, welche beispielsweise zur Übertragung einer von der Steuereinheit bestimmten Messinformation (z.B. an ein Mobilgerät, eine Steuereinheit einer Fachanlage oder einen Backend-Server) eingerichtet ist. Hierzu können die eine oder mehreren Kommunikationsschnittstellen beispielsweise auf optischer Übertragung und/oder Übertragung von elektrischen, magnetischen oder elektromagnetischen Signalen oder Feldern (z.B. Bluetooth, NFC und/oder RFID) beruhen. In alternativen oder zusätzlichen Beispielen kann eine Kommunikation über eine Kommunikationsschnittstelle der Steuereinheit des Messmoduls auf dem Internet Protocol (IP) basieren. Beispielsweise ist dazu zumindest eine der Kommunikationsschnittstelle(n) der Steuereinheit des Messmoduls als Local Area Network (LAN) Schnittstelle ausgeführt.

Zum Beispiel kann das Messmodul neben den oben beschriebenen Merkmalen über weitere Ausstattungsmerkmale verfügen und beispielsweise wie weiter unten beschrieben Transportmittel zum Transportieren einer in das Fach des Messmoduls eingelegten Sendung in eine Fachanlage oder Druckmittel zum Aufdrucken einer Versandbeschriftung umfassen.

Das Bewirken des Öffnens des verriegelbaren Messmoduls kann beispielsweise so verstanden werden, dass ein Öffnen des Fachs des Messmoduls bewirkt wird. Dabei kann das Öffnen des Fachs zum Beispiel das Entriegeln des zuvor verriegelten Fachs des Messmoduls umfassen. Zum Bewirken des Öffnens kann beispielsweise die Steuereinheit des Messmoduls die Schlosssteuereinheit des Messmoduls steuern (z.B. mittels eines elektrischen Signals), sodass die Schlosssteuereinheit eine Tür des Fachs des Messmoduls öffnet und dazu beispielsweise ein Schloss der Tür entriegelt In einem anderen Beispiel kann die Steuereinheit des Messmoduls das Fach des Messmoduls unmittelbar (d.h. ohne ein Bewirken) und ohne die zusätzliche Verwendung einer Schlosssteuereinheit öffnen.

Nach dem Öffnen (z.B. nach dem Entriegeln) des Messmoduls kann beispielsweise ein Benutzer eine Sendung (z.B. ein Brief, Paket oder Päckchen) in das geöffnete Fach des Messmoduls einlegen. Dabei kann es sich zum Beispiel um eine Sendung handeln, welche im weiteren Verlauf versendet wird und hierzu beispielsweise in eine Fachanlage eingelagert werden soll. Nach dem Einlegen der Sendung in das Messmodul schließt der Benutzer beispielsweise das Messmodul, sodass anschließend ein Messparameter, der in das Messmodul eingelegten Sendung erfasst werden kann, während das Messmodul geschlossen ist und sich die Sendung in dem Messmodul befindet. In einem anderen Beispiel kann das Messmodul nach dem Einlegen der Sendung und während dem Erfassen eines Messparameters der Sendung geöffnet bleiben.

Nach dem Öffnen des Messmoduls und beispielsweise nach dem Einlegen einer Sendung in das geöffnete Messmodul folgt ein Erhalten zumindest eines Messparameters der in das Messmodul eingelegten Sendung. Das Erhalten des zumindest einen Messparameters umfasst beispielsweise das Erfassen des zumindest einen Messparameters der Sendung durch den zumindest einen Sensor des Messmoduls, wobei der zumindest eine Messparameter der Sendung von dem zumindest einen Sensor erfasst wird, während sich die Sendung in dem Fach des Messmoduls befindet. Nach dem Erfassen wird der zumindest eine erfasste Messparameter beispielsweise an die Steuereinheit des Messmoduls übertragen, an welcher der zumindest eine Messparameter von der Steuereinheit erhalten (z.B. empfangen) wird. Zum Beispiel kann die Steuereinheit des Messmoduls das Erfassen des Messparameters bewirken, in dem es den zumindest einen Sensor ansteuert, sodass dieser den zumindest einen Messparameter erfasst und an die Steuereinheit überträgt

Unter dem Bereitstellen (z.B. von der Steuereinheit des Messmoduls) einer Messinformation zumindest teilweise basierend auf dem erhaltenen zumindest einen Messparameter soll beispielsweise verstanden werden, dass eine Messinformation zumindest teilweise basierend auf dem erhaltenen Messparameter der eingelegten Sendung (z.B. von der Steuereinheit des Messmoduls) bestimmt wird und anschließend zum Beispiel für die Übertragung bereitgestellt wird und übertragen wird. Eine solche Übertragung kann beispielsweise das Übertragen der Messinformation an eine Steuereinheit einer Fachanlage, an ein Mobilgerät oder an einen Backend-Server umfassen. Dementsprechend kann das Verfahren gemäß dem ersten Aspekt beispielsweise das Bestimmen der Messinformation zumindest teilweise basierend auf dem erhaltenen zumindest einen Messparameter umfassen und alternativ oder zusätzlich das Übertragen des Messinformation umfassen.

Zum Beispiel wird die Messinformation zumindest teilweise basierend auf dem erhaltenen zumindest einen Messparameter bestimmt, indem die Messinformation in Abhängigkeit von dem zumindest einen Messparameter ermittelt, abgeleitet oder berechnet wird. In einem anderen Beispiel kann die Messinformation dem erhaltenen Messparameter entsprechen. In einem weiteren Beispiel kann es erforderlich sein, dass eine Messinformation aus einer Mehrzahl von Messparametern der eingelegten Sendung bestimmt wird.

Zum Beispiel wird basierend auf einem anhand eines Gewichtssensors erfassten Messparameters, welcher Information über ein Gewicht der eingelegten Sendung anzeigt, eine Messinformation bestimmt und bereitgestellt, wobei die Messinformation ein Gewicht der in der Messmodul eingelegten Sendung repräsentiert. Dabei kann die dementsprechend bereitgestellte Messinformation beispielsweise das Gewicht der Sendung in einer passenden Einheit anzeigen (z.B. Gewicht 2 kg). In einem anderen Beispiel zeigt die Messinformation an, dass das Gewicht der Sendung größer oder kleiner ist als ein vorgegebener Schwellwert (z.B. dass das Gewicht der Sendung größer oder kleiner ist als 2 kg). In einem anderen Beispiel wird basierend auf einem anhand eines optischen Sensors erfassten Messparameter, welcher Information über eine Größe der eingelegten Sendung anzeigt, eine Messinformation bestimmt und bereitgestellt, wobei die Messinformation eine Größe der in das Messmodul eingelegten Sendung repräsentiert Dabei kann die dementsprechend bereitgestellte Messinformation beispielsweise eine Höhe der Sendung in einer passenden Einheit anzeigen (z.B. Höhe 35 cm). In einem anderen Beispiel zeigt die Messinformation an, dass eine Größe der Sendung größer oder kleiner ist als ein vorgegebener Schwellwert (z.B. dass eine Höhe der Sendung größer oder kleiner ist als 35 cm).

Zum Beispiel wird zumindest teilweise basierend auf der bereitgestellten Messinformation zumindest eine Versandoption für ein Versenden der Sendung bestimmt Dies soll beispielsweise so verstanden werden, dass die Messinformation von der Steuereinheit des Messmoduls beispielsweise an einen Backend-Server oder an eine Steuereinheit einer Fachanlage übertragen und dort als zumindest eine Messinformation erhalten wird. Nach dem Erhalten der Messinformation wird an dem Backend-Server oder an der Steuereinheit der Fachanlage zumindest eine Versandoption für ein Versenden der Sendung zumindest teilweise basierend auf der bereitgestellten Messinformation bestimmt Dabei soll verstanden werden, dass zusätzlich zu der zumindest einen Messinformation beispielsweise eine oder mehrere weitere Messinformationen erhalten werden können, wobei basierend auf der zumindest einen erhaltenen Messinformation und der erhaltenen einen oder mehreren weiteren Messinformationen eine Versandoption für ein Versenden der Sendung bestimmt wird.

Eine Versandoption für ein Versenden der Sendung soll beispielsweise als eine Versandoption (z.B. ein Versandprodukt oder eine Versanddienstleitung) verstanden werden, gemäß derer ein Versenden der Sendung seitens eines Versanddienstleisters angeboten wird. Abhängig von dem Gewicht und/oder der Größe können sich eine oder mehrere Versandoptionen für das Versenden einer Sendung ergeben. Dementsprechend können zumindest teilweise basierend auf der erhaltenen Messinformation eine oder mehrere Versandoptionen bestimmt werden.

In einem Beispiel können basierend auf einer Messinformation, wonach das Gewicht einer Sendung 2 kg und/oder eine Größe einer Sendung höchstens 60 cm in der Höhe beträgt, die Versandoptionen "Päckchen" oder "Paket" bestimmt werden, wenn für eine Sendung dieses Gewichts und/oder dieser Größe solche zwei Versandoptionen für das Versenden angeboten werden. Diese Versandoptionen unterscheiden sich beispielsweise in einen oder mehreren Aspekten wie zum Beispiel eine verfügbare Sendungsverfolgung oder Transporthaftung. Abhängig oder unabhängig von derartigen beispielhaften Versandoptionen können weitere Versandoptionen für das Versenden der Sendung bestimmt werden, beispielsweise eine optionale Transportversicherung, Versendung als Sperrgut, Bezahlung per Nachnahme und/oder klimaneutrale Versendung.

Ein Bestimmen der Versandoption zumindest teilweise basierend auf der Messinformation kann beispielsweise einen Abgleich der Messinformation mit einem Datensatz bezüglich einer Mehrzahl von Versandoptionen umfassen, wobei bestimmt wird, welche zumindest eine Versandoption der Mehrzahl von Versandoptionen angesichts des von der Messinformation repräsentierten Gewichts und/oder der von der Messinformation repräsentierten Größe infrage kommt.

Darüber hinaus kann zum Beispiel eine Versandoption basierend auf der zumindest einen Messinformation und zusätzlich basierend auf weiterer Information wie beispielsweise auf einer oder mehreren weiteren Messinformationen bestimmt werden.

Zum Beispiel kann im Anschluss an das Bestimmen der zumindest einen Versandoption zumindest teilweise basierend auf der zumindest einen Versandoption und einer Benutzereingabe eine Versandinformation für das Versenden der Sendung bestimmt werden. Beispielsweise kann der Benutzer eine oder mehrere der bestimmten Versandoptionen auswählen und somit eine Versandinformation bestimmen, wobei die Versandinformation angibt, gemäß welcher (z.B. ausgewählten) Versandoption oder welchen (z.B. ausgewählten) Versandoptionen die Sendung zu versenden ist Zum Beispiel gibt eine Versandinformation an, ob die Sendung beispielsweise als Paket oder Päckchen oder in anderen Beispielen darüber hinaus mit einer Transportversicherung oder klimaneutral zu versenden ist.

Vorteilhafterweise ermöglicht das beschriebene Vorgehen anhand eines verriegelbaren Messmoduls eine Berücksichtigung eines Gewichts und/oder einer Größe einer Sendung für die Bestimmung einer oder mehrerer Versandoptionen, die für das Versenden der Sendung infrage kommen. Insbesondere ermöglicht der Einsatz des verriegelbaren Messmoduls einen sicheren Außenbetrieb mit Schutz vor Vandalismus und Umwelteinflüssen. Dies betrifft beispielsweise einen Schutz des Messmoduls (z.B. der im Fach des Messmoduls angeordneten, vergleichsweise sensiblen Sensorik) vor mutwilliger Beschädigung im ungenutzten Zustand des Messmoduls. In anderen Beispielen kann das Messmodul außerdem vor einer Manipulation des Messvorgangs zur Bestimmung einer Messinformation geschützt werden. Beispielsweise kann das Messmodul als Teil einer Fachanlage oder in direkter Nähe einer Fachanlage betrieben werden, um einem Benutzer eine komfortable Ermittlung der möglichen Versandoptionen für eine zu versendende Sendung zu ermöglichen, bevor der Benutzer die Sendung in die Fachanlage einlagert.

Weitere Vorteile der beispielhaften Aspekte der vorliegenden Offenbarung werden nachfolgend anhand beispielhafter Ausführungsformen beschrieben, deren Offenbarung für alle Aspekte der vorliegenden Offenbarung gleichermaßen gelten soll.

In einer beispielhaften Ausführungsform umfasst das Verfahren gemäß dem ersten Aspekt ferner:
- Bestimmen, nach dem Bewirken des Öffnens des Messmoduls, ob die Sendung in das Messmodul eingelegt wurde;
- Bewirken des Verriegelns des Messmoduls, wenn bestimmt wird, dass die Sendung in das Messmodul eingelegt wurde; und
- Bewirken des Entriegelns des Messmoduls, nachdem der zumindest eine Messparameter der Sendung erhalten wurde.

Zum Beispiel bestimmt die Steuereinheit des Messmoduls, ob nach dem Bewirken des Öffnens des Messmoduls eine Sendung von einem Benutzer in das Messmodul eingelegt wurde. Dieses Bestimmen umfasst beispielsweise ein Bestimmen ob sich eine Sendung im Fach des Messmoduls zu einem Zeitpunkt nach dem Bewirken des Öffnens und weiterhin beispielsweise vor einem Zeitpunkt des Erhaltens des zumindest einen Messparameters befindet Ein solches Bestimmen kann mittels des zumindest einen Sensors des Messmoduls (z.B. ein Gewichtssensor), welcher dazu eingerichtet ist, zumindest einen Messparameter einer in das Messmodul eingelegten Sendung zu bestimmen, erfolgen. Registriert beispielsweise ein Gewichtssensor des Messmoduls keine Belastung, kann bestimmt werden, dass sich keine Sendung in dem Messmodul befindet und dass demnach keine Sendung in das Messmodul eingelegt wurde.

Das Bewirken des Verriegelns und Entriegelns des verriegelbaren Messmoduls kann beispielsweise so verstanden werden, dass das Verriegeln und Entriegeln des Fachs durch die Steuereinheit des Messmoduls bewirkt wird. Zum Bewirken des Verriegelns und Entriegelns kann beispielsweise die Steuereinheit des Messmoduls die Schlosssteuereinheit des Messmoduls steuern (z.B. mittels eines jeweiligen elektrischen Signals), sodass die Schlosssteuereinheit ein Schloss des Fachs des Messmoduls verriegelt oder entriegelt. In einem anderen Beispiel kann die Steuereinheit des Messmoduls das Schloss des Fachs des Messmoduls unmittelbar (d.h. ohne ein Bewirken) und ohne die zusätzliche Verwendung einer Schlosssteuereinheitverriegeln und Entriegeln.

Indem das Messmodul verriegelt wird, wenn bestimmt wird, dass die Sendung in das Messmodul eingelegt wurde, und anschließend das Messmodul entriegelt wird, nachdem der zumindest eine Messparameter der Sendung (z.B. an der Steuereinheit des Messmoduls) erhalten wurde, ist das Messmodul beispielsweise verriegelt, während der zumindest eine Messparameter der Sendung erfasst wird. Vorteilhafterweise kann der Messvorgang somit geschützt werden, beispielsweise vor Umwelteinflüssen oder Manipulation. Andernfalls könnte zum Beispiel ein Benutzer den Messvorgang derart manipulieren, dass eine Messinformation bestimmt wird, welche ein verfälschtes Gewicht und/oder eine verfälschte Größe der eingelegten Sendung repräsentiert

In einer beispielhaften Ausführungsform gemäß dem ersten Aspekt wird das Öffnen des verriegelbaren Messmoduls bewirkt, wenn bestimmt wird, dass eine erhaltene Zugangsinformation zum Öffnen des Messmoduls berechtigt.

Zum Beispiel kann das Messmodul grundsätzlich (z.B. gemäß einer Voreinstellung) verriegelt sein, solange das Messmodul nicht für das Bestimmen einer Messinformation verwendet wird. Auf diese Weise kann das Messmodul im ungenutzten Zustand beispielsweise vor Vandalismus geschützt werden. In diesem Fall kann das Öffnen des Messmoduls ein Entriegeln des Messmoduls umfassen, sodass das Messmodul nur entriegelt und geöffnet wird, wenn das Bestimmen einer Messinformation bevorsteht. Ein bevorstehendes Bestimmen einer Messinformation kann zum Beispiel durch Übertragen einer Zugangsinformation (z.B. eines Benutzers, welcher eine Sendung einlagern möchte) an die Steuereinheit des Messmoduls angezeigt werden, wobei die Zugangsinformation zum Öffnen des Mesmoduls berechtigt Eine Zugangsinformation kann beispielsweise einen oder mehrere Zugangsparameter repräsentieren, wobei zum Beispiel ein Zugangsparameter einen Zeitraum angibt, in welchem die Zugangsinformation zum Öffnen des Messmoduls berechtigt

Ein Bestimmen, dass die erhaltene Zugangsinformation zum Öffnen des Messmoduls berechtigt, kann beispielsweise von der Steuereinheit des Messmoduls durchgeführt werden. Alternativ oder zusätzlich kann das Bestimmen von einer Steuereinheit einer Fachanlage durchgeführt werden, wobei die Steuereinheit der Fachanlage anschließend das Ergebnis des Bestimmens an die Steuereinheit des Messmoduls weiterleiten kann, sodass die Steuereinheit des Messmoduls gegebenenfalls das Öffnen und Entriegeln des Messmoduls bewirkt (z.B. durch Ansteuerung der Schlosssteuereinheit des Messmoduls).

Eine Zugangsinformation kann vielfältig ausgeprägt sein. Es kann sich beispielsweise um Buchstaben, Zahlen, Symbole, Muster, Bitfolgen o.ä. handeln. Auch eine Kombination der vorgenannten Formate ist möglich. Eine beispielhafte Zugangsinformation könnte 5, 8, 9, 10, 20, 50, eine Anzahl zwischen den genannten Werten, oder mehr oder weniger alphanumerische Zeichen umfassen oder daraus bestehen. Insbesondere kann es sich bei einer Zugangsinformation z.B. um ein Kennwort handeln, z.B. ein von einem Benutzer oder einer Vorrichtung, z.B. zufällig, gewähltes Kennwort. Eine Zugangsinformation kann außerdem oder stattdessen auch eine Benutzerkennung enthalten, beispielsweise eine Kundennummer, Personalien, einen persönlichen kryptografischen Schlüssel oder eine ähnliche, z.B. einem Benutzer eindeutig zuordenbare, Information. Eine Zugangsinformation kann unter anderem grafisch darstellbar, lesbar für Menschen und/oder Maschinen und/oder elektronisch und/oder per Funk übermittelbar sein, um nur einige Beispiele zu nennen.

Eine Zugangsinformation kann beispielsweise von einem Mobilgerät (z.B. einem Mobiltelefon des Benutzers, welcher eine Sendung einlagern möchte), an die Steuereinheit des Messmoduls übermittelt werden. Diese Übermittlung kann beispielsweise mittels einer Funkverbindung (z.B. Bluetooth) erfolgen. In einem anderen Beispiel kann die Zugangsinformation mittels eines optischen Musters übermittelt werden, wobei das optische Muster auf einem Bildschirm des Mobilgeräts angezeigt wird zur Erfassung durch eine Erfassungseinheit der Steuereinheit des Messmoduls. Das optische Muster kann beispielsweise ein QR- oder Barcode sein und die Erfassungseinheit kann beispielsweise ein Scanner zum Scannen entsprechender Muster sein. In einem anderen Beispiel erfolgt die Übermittlung der Zugangsinformation mittels Anzeige der Zugangsinformation auf einem Bildschirm des Mobilgeräts zur visuellen Erfassung durch einen Benutzer des Mobilgeräts, welcher die Zugangsinformation dann an einer Eingabeeinheit des Messmoduls, insbesondere einer Tastatur oder einem berührungsempfindlichen Bildschirm, eingibt Die Zugangsinformation kann dabei beispielsweise als alphanumerische Zeichenfolge auf dem Bildschirm des Mobilgeräts angezeigt werden.

Die erhaltene Zugangsinformation kann beispielsweise im Rahmen eines Reservierungsvorgangs erzeugt werden. In einem solchen Beispiel reserviert ein Benutzer, welcher eine Sendung einlagern möchte, eine Nutzung des Messmoduls (z.B. über eine Internetseite eines Postdienstleisters, welcher das Messmodul betreibt). Als Folge der Reservierung kann der Benutzer eine Zugangsinformation, die zum Öffnen des Messmoduls berechtigt, erhalten (z.B. indem die Zugangsinformation auf einem Mobilgerät des Benutzers erhalten wird).

Vorteilhafterweise kann über die Zugangsinformation sichergestellt werden, dass das Messmodul nur von einem Benutzer geöffnet (z.B. entriegelt) werden kann, welcher zum Öffnen berechtigt ist Beispielsweise kann das Messmodul in anderen Fällen geschlossen und verriegelt bleiben und auf diese Weise das Messmodul (z.B. die im Fach des Messmoduls angeordnete, vergleichsweise sensible Sensorik) insbesondere vor Vandalismus geschützt werden.

In einer beispielhaften Ausführungsform umfasst das Verfahren gemäß dem ersten Aspekt ferner:
- Bestimmen, nachdem der zumindest eine Messparameter erhalten wurde, ob sich eine Sendung in dem Messmodul befindet; und
- wenn bestimmt wird, dass sich keine Sendung in dem Messmodul befindet, Bewirken des Verriegelns des Messmoduls.

Ein Bestimmen, ob sich eine Sendung in dem Messmodul befindet, kann beispielsweise mittels des zumindest einen Sensors des Messmoduls (z.B. ein Gewichtssensor), welcher dazu eingerichtet ist, zumindest einen Messparameter einer in das Messmodul eingelegten Sendung zu bestimmen, erfolgen. Registriert beispielsweise ein Gewichtssensor des Messmoduls keine Belastung, kann demzufolge bestimmt werden, dass sich keine Sendung in dem Messmodul befindet und dass demnach eine zuvor in das Messmodul eingelegte Sendung wieder entnommen wurde.

Nachdem der zumindest eine Messparameter erhalten wurde und eine Messinformation zumindest teilweise basierend auf dem erhaltenen zumindest einen Messparameter bereitgestellt wurde, kann die in das Messmodul eingelegte Sendung beispielsweise von dem Benutzer, welcher die Sendung zuvor in das Messmodul eingelegt hat, wieder entnommen werden. Dies wird beispielsweise ermöglicht, indem nach dem Erfassen des Messparameters ein Öffnen des Messmoduls bewirkt wird.

Hat ein Benutzer nach dem Erhalten des zumindest einen Messparameters die zuvor eingelegte Sendung wieder entnommen und wurde diese Entnahme (z.B. mittels der Sensorik des Messmoduls) beispielsweise von der Steuereinheit des Messmoduls bestimmt, kann ein Verriegeln des Messmoduls bewirkt werden (z.B. indem die Steuereinheit des Messmoduls die Schlosssteuereinheit des Messmoduls entsprechend steuert).

Vorteilhafterweise kann auf diese Weise sichergestellt werden, dass das Messmodul nach erfolgter Vermessung einer Sendung wieder verriegelt wird (bspw. bis ein weiterer Messvorgang bevorsteht). Dies ermöglicht einen Schutz des Messmoduls (z.B. der im Fach des Messmoduls angeordneten, vergleichsweise sensiblen Sensorik) beispielsweise vor Vandalismus, insbesondere im ungenutzten Zustand des Messmoduls.

In einer beispielhaften Ausführungsform gemäß dem ersten Aspekt wird die zumindest eine Versandoption zumindest teilweise basierend auf der bereitgestellten Messinformation an einem Backend-Server bestimmt, wobei das Bereitstellen der Messinformation weiter umfasst:
- Übertragen der Messinformation an den Backend-Server; oder
- Übertragen der Messinformation an ein Mobilgerät, wobei die übertragene Messinformation von dem Mobilgerät an den Backend-Server weitergeleitet wird; oder
- Übertragen der Messinformation an eine Fachanlage, wobei die übertragene Messinformation von der Fachanlage an den Backend-Server weitergeleitet wird.

Zum Beispiel liegen am Backend-Server entsprechende Datensätze vor (welche z.B. in einem Nutzdatenspeicher des Backend-Servers abgespeichert sind), welche zum Bestimmen der Versandoption zumindest teilweise basierend auf der Messinformation verwendet werden. Dementsprechend kann beispielsweise am Backend-Server ein Abgleich der Messinformation mit einem Datensatz bezüglich einer Mehrzahl von Versandoptionen erfolgen, wobei am Backend-Server bestimmt wird, welche zumindest eine Versandoption der Mehrzahl von Versandoptionen angesichts des von der Messinformation repräsentierten Gewichts und/oder der von der Messinformation repräsentierten Größe infrage kommt. Darüber hinaus kann das Bestimmen der zumindest einen Versandoption zusätzlich auf einer oder mehreren weiteren Messinformationen basieren, welche ebenso von dem Messmodul bereitgestellt werden oder in anderen Beispielen an der Fachanlage bestimmt und dort bereitgestellt werden (z.B. für eine anschließende Übertragung an den Backend-Server).

Bevor die zumindest eine Versandoption zumindest teilweise basierend auf der bereitgestellten Messinformation an dem Backend-Server bestimmt wird, wird die Messinformation zum Beispiel von der Steuereinheit des Messmoduls an den Backend-Server übertragen. Dies ist beispielsweise auf verschiedenen Übertragungswegen möglich, wobei diese Übertragungswege zum Beispiel von der technischen Ausstattung des Messmoduls abhängen.

Gemäß einem Beispiel kann die Messinformation von der Steuereinheit des Messmoduls unmittelbar (z.B. ohne ein Mobilgerät oder eine Komponente einer Fachanlage als zusätzliche Instanz im Übertragungsweg) an den Backend-Server übertragen werden. Hierzu weist das Messmodul (z.B. die Steuereinheit des Messmoduls) beispielsweise eine zur Fern-Kommunikation eingerichtete Kommunikationsschnittstelle auf (z.B. eine Schnittstelle zu einem zellularen Mobilfunksystem, eine DSL-Schnittstelle oder eine Local Area Network (LAN)-Schnittstelle), mittels derer sie mit dem Backend-Server kommunizieren kann. Vorteilhafterweise kann das Messmodul auf diese Weise eigenständig die bestimmte Messinformation an den Backend-Server übertragen, ohne dabei beispielsweise auf eine Verbindung zur Datenübertragung an eine Fachanlage oder eine weitere Vorrichtung angewiesen zu sein. Zum Beispiel muss das Messmodul dann nicht in eine bereits im Betrieb befindliche Fachanlage (z.B. nachträglich) integriert werden und/oder beispielsweise nicht an einer Steuereinheit dieser Fachanlage angeschlossen werden. In anderen Fällen kann beispielsweise eine Fachanlage, in welche das Messmodul integriert ist, nicht über die erforderliche technische Ausstattung verfügen, um mit dem Messmodul zu kommunizieren oder die bestimmte Messinformation zu handhaben, sodass sich eine eigenständige Übertragungsmöglichkeit des Messmoduls zum Backend-Server als vorteilhaft erweisen kann.

Gemäß einem weiteren Beispiel kann die Messinformation von der Steuereinheit des Messmoduls zunächst an eine Fachanlage (z.B. an eine Steuereinheit der Fachanlage) übertragen werden, wobei die übertragene Messinformation anschließend von der Fachanlage (z.B. der Steuereinheit der Fachanlage) an den Backend-Server weitergeleitet wird. Hierzu benötigt das Messmodul beispielsweise keine zur Fern-Kommunikation eingerichtete Kommunikationsschnittstelle, weil stattdessen auf eine derartige Kommunikationsschnittstelle der Fachanlage zur Weiterleitung der Messinformation an den Backend-Server zurückgegriffen werden kann. Vorteilhafterweise kann das Messmodul beispielsweise kostengünstiger ausgestaltet sein und lediglich mit einer kostengünstigeren Kommunikationsschnittstelle ausgestattet sein, welche für eine Kommunikation mit einer Fachanlage (in welche das Messmodul z.B. integriert ist) ausreichend ist.

Gemäß einem weiteren Beispiel kann die Messinformation von der Steuereinheit des Messmoduls zunächst an ein Mobilgerät übertragen werden, wobei die übertragene Messinformation anschließend von dem Mobilgerät an den Backend-Server weitergeleitet wird. Bei dem Mobilgerät kann es sich beispielsweise um ein Mobilgerät (z.B. ein Mobiltelefon) des Benutzers handeln, welcher die in das Messmodul eingelegte Sendung zum Versenden einlagern möchte. In diesem Fall benötigt das Messmodul beispielsweise keine zur Fern-Kommunikation eingerichtete Kommunikationsschnittstelle, sondern stattdessen eine Nahbereichs-Kommunikationsschnittstelle, wie zum Beispiel eine Nahbereichs-Funkkommunikation (z.B. Bluetooth oder NFC). Für die Weiterleitung der Messinformation kann anschließend auf eine Fern-Kommunikationsschnittstelle des Mobilgeräts (z.B. eine Schnittstelle zu einem zellularen Mobilfunksystem) zurückgegriffen werden. Vorteilhafterweise kann das Messmodul auf diese Weise die bestimmte Messinformation an den Backend-Server übertragen, ohne dabei beispielsweise auf eine Verbindung zur Datenübertragung an eine Fachanlage angewiesen zu sein. Außerdem kann das Messmodul auf diese Weise zugleich kostengünstiger ausgestaltet sein und lediglich mit einer kostengünstigeren Kommunikationsschnittstelle ausgestattet sein, welche für eine Nahbereichs-Kommunikation mit einem Mobilgerät ausreichend ist

In einer beispielhaften Ausführungsform gemäß dem ersten Aspekt wird zumindest teilweise basierend auf der zumindest einen Versandoption und einer Benutzereingabe eine Versandinformation für das Versenden der Sendung bestimmt wird.

Zum Beispiel kann im Anschluss an das Bestimmen der zumindest einen Versandoption zumindest teilweise basierend auf der zumindest einen Versandoption und einer Benutzereingabe eine Versandinformation für das Versenden der Sendung bestimmt werden. Beispielsweise kann ein Benutzer eine oder mehrere der bestimmten Versandoptionen auswählen und somit eine Versandinformation bestimmen, wobei die Versandinformation zum Beispiel auf der einen oder den mehreren ausgewählten Versandoptionen basiert und angibt, ob die Sendung beispielsweise als Paket oder Päckchen oder in anderen Beispielen darüber hinaus mit einer Transportversicherung oder klimaneutral zu versenden ist

Das Bestimmen einer Versandinformation und /oder die Benutzereingabe hierzu kann beispielsweise an einem Mobilgerät (z.B. einem Mobiltelefon des Benutzers, welcher eine Sendung einlagern möchte), an einer Fachanlage (z.B. an einer Steuereinheit einer Fachanlage, von welcher das Messmodul ein Teil ist) und/oder an dem Backend-Server, an welchem die zumindest eine Versandoption bestimmt wurde, erfolgen. Zu diesem Zweck wird beispielsweise die zumindest eine Versandoption von dem Backend-Server an das Mobilgerät oder an die Fachanlage übertragen.

Die Auswahl einer Versandoption kann beispielsweise durch eine Benutzereingabe (z.B. an einem Mobilgerät oder an einer Fachanlage) erfolgen, wobei einem Benutzer beispielsweise auf einem berührungsempfindlichen Bildschirm (z.B. des Mobilgeräts oder der Fachanlage) die zumindest eine bestimmte Versandoption angezeigt wird und der Benutzer über eine Eingabeeinheit (z.B. eine Tastatur oder den berührungsempfindlichen Bildschirm) zumindest eine der angezeigten Versandoptionen auswählt. Nachdem zum Beispiel durch diese Auswahl einer Versandoption eine Versandinformation bestimmt wurde, kann diese Versandinformation von dem Mobilgerät oder von der Fachanlage an den Backend-Server zurückgesendet werden.

In einem anderen Beispiel kann die Bestimmung einer Versandinformation auch ohne eine Benutzereingabe erfolgen. Dies kann beispielsweise der Fall sein, wenn nur eine Versandoption bestimmt wurde und keine Auswahl einer Versandoptionen aus mehreren Versandoptionen erforderlich ist, um eine Versandinformation zu bestimmen.

In einer beispielhaften Ausführungsform umfasst das Verfahren gemäß dem ersten Aspekt ferner:
- Bewirken des Bereitstellens einer Versandbeschriftung, wobei die Versandbeschriftung zumindest teilweise auf der Versandinformation basiert

Eine Versandinformation gibt beispielsweise an, gemäß welcher Versandoption oder welchen Versandoptionen eine Sendung zu versenden ist Zum Beispiel gibt eine Versandinformation an, ob die Sendung beispielsweise als Paket oder Päckchen oder in anderen Beispielen darüber hinaus mit einer Transportversicherung oder klimaneutral zu versenden ist. Um eine Sendung mit einer ihr zugeordneten Versandinformation zu beschriften und somit für das Versenden vorzubereiten, kann die Versandinformation beispielsweise für das Erstellen einer Versandbeschriftung genutzt werden. Die Versandbeschriftung zeigt demnach an, gemäß welcher Versandoption oder welchen Versandoptionen eine Sendung zu versenden ist Darüber hinaus kann die Versandbeschriftung weitere Informationen anzeigen (z.B. Adressinformation des Empfängers und/oder des Absenders der Sendung). Die Versandbeschriftung kann beispielsweise ein optisches Muster sein (z.B. ein QR- oder Barcode), alphanumerische Zeichen umfassen und/oder in Form eines Codes vorliegen.

Zum Beispiel umfasst das Bereitstellen der Versandbeschriftung das Aufdrucken der Versandbeschriftung auf die in das Messmodul eingelegte Sendung. Hierzu kann das Messmodul über Druckmittel (z.B. einen Laserdrucker) verfügen, welche beispielsweise unter Verwendung von Tinte oder Tonerpulver die Versandbeschriftung auf die eingelegte Sendung (z.B. auf eine dem Druckmittel zugewandten Seite der Sendung) drucken. In einem anderen Beispiel verfügt das Messmodul beispielsweise über Druckmittel, welche die Versandbeschriftung in Form eines Etiketts ausdrucken und derart bereitstellen, sodass ein Benutzer das Etikett dem Messmodul entnehmen und anschließend auf die Sendung aufbringen (z.B. aufkleben) kann. Dies kann beispielsweise erfolgen, nachdem der zumindest eine Messparameter der Sendung erfasst wurde und die Sendung dem Messmodul wieder entnommen wurde.

Damit zum Beispiel die Steuereinheit des Messmoduls das Bereitstellen der Versandbeschriftung, welche zumindest teilweise auf einer Versandinformation basiert, durchführen kann, kann die Versandbeschriftung zuvor an der Steuereinheit des Messmoduls erhalten werden. Die umfasst zum Beispiel, dass die Steuereinheit des Messmoduls die Versandinformation empfängt (z.B. von dem Backend-Server) und basierend auf der empfangenen Versandinformation die Versandbeschriftung bestimmt (z.B. erzeugt). In einem anderen Beispiel kann die Steuereinheit des Messmoduls die Versandbeschriftung empfangen (z.B. von dem Backend-Server, an welchem die Versandbeschriftung zuvor bestimmt wurde).

Ein Bewirken des Bereitstellens der Versandbeschriftung soll beispielsweise so verstanden werden, dass die Steuereinheit des Messmoduls, an welcher die Versandbeschriftung vorliegt, zum Beispiel Druckmittel des Messmoduls ansteuert, sodass diese die Versandbeschriftung bereitstellen (und z.B. auf die Sendung ausdrucken oder als Etikett ausgeben).

In einer beispielhaften Ausführungsform umfasst das Verfahren gemäß dem ersten Aspekt ferner:
- Bewirken des Verpackens der Sendung zumindest teilweise basierend auf der bereitgestellten Messinformation.

Ein Bewirken des Verpackens der Sendung soll beispielsweise so verstanden werden, dass die Steuereinheit des Messmoduls zum Beispiel Verpackungsmittel des Messmoduls ansteuert, sodass diese Verpackungsmittel die in das Messmodul eingelegte Sendung verpacken (z.B. insbesondere während sich die Sendung im Messmodul befindet). Zum Beispiel wird durch das Verpacken die Sendung durch die Verpackungsmittel des Messmoduls (z.B. ein geeigneter Verpackungsmechanismus wie bspw. eine automatische Verpackungsvorrichtung) mit einem Verpackungsmaterial (z.B. einem Karton, einer Tüte, einer Folie und/oder einem Umschlag) ganz oder zumindest teilweise umhüllt. Indem das Verpacken der Sendung zumindest teilweise auf der bereitgestellten Messinformation (und darüber hinaus z.B. auf einer oder mehreren weiteren Messinformationen) basiert, können im Rahmen des Verpackens beispielsweise das von der Messinformation (und z.B. zusätzlich das von einer weiteren Messinformation) repräsentierte Gewicht der Sendung und/oder die repräsentierte Größe der Sendung berücksichtigt werden. Ein Verpacken der Sendung zumindest teilweise basierend auf der zumindest einen bereitgestellten Messinformation kann beispielweise vorteilhaft sein, wenn die eingelegte Sendung vor der Einlagerung noch nicht verpackt ist oder zumindest noch nicht derart verpackt ist, dass sie wie in das Messmodul eingelegt versendet werden kann.

In einer beispielhaften Ausführungsform umfasst das Verfahren gemäß dem ersten Aspekt ferner:
- Erhalten einer Frankierungsinformation der eingelegten Sendung, wobei die Frankierungsinformation eine Frankierung der eingelegten Sendung anzeigt

Zum Beispiel umfasst das Erhalten einer Frankierungsinformation der eingelegten Sendung ein Erfassen eines Postwertzeichens (z.B. eine Briefmarke, ein Freistempel und/oder Barcode), welches sich auf der eingelegten Sendung befindet. Dieses Erfassen kann beispielsweise durch den zumindest einen Sensor des Messmoduls erfolgen, welcher dazu eingerichtet ist, zumindest einen Messparameter der in das Messmodul eingelegten Sendung zu erfassen. Beispielsweise umfasst das Messmodul einen oder mehrere optische Sensoren, welche Information bezüglich der Größe einer in das Fach des Messmoduls eingelegten Sendung erfassen und welche außerdem ein auf der Sendung aufgebrachtes Postwertzeichen erfassen (z.B. durch Scannen oder Fotografieren des Postwertzeichens).

Zum Beispiel zeigt das erfasste Postwertzeichen eine Frankierung der eingelegten Sendung an, indem das erfasste Postwertzeichen beispielsweise anzeigt, ob und in welcher Höhe Versandkosten für das Versenden der eingelegten Sendung (z.B. bereits vor dem Einlegen der Sendung in das Messmodul) entrichtet worden sind. Beispielsweise wird die Frankierungsinformation zumindest teilweise basierend auf dem erfassten Postwertzeichen bestimmt, sodass die Frankierungsinformation die Frankierung entsprechend dem Postwertzeichen anzeigt Vorteilhafterweise können demnach bereits für das Erfassen zumindest eines Messparameters vorhandene Sensoren des Messmoduls weiterhin dazu verwendet werden zu erfassen, ob und in welcher Höhe Versandkosten für das Versenden der eingelegten Sendung bereits vorab entrichtet worden sind.

In einer beispielhaften Ausführungsform umfasst das Verfahren gemäß dem ersten Aspekt ferner:
- Bewirken, nach dem Bereitstellen der Messinformation, des Einlagerns der Sendung in die Fachanlage für das Versenden der Sendung gemäß der Versandinformation.

Nach dem Bereitstellen der Messinformation (z.B. durch die Steuereinheit des Messmoduls) wird beispielsweise an dem Backend-Server zumindest eine Versandoption bestimmt, auf Grundlage welcher zum Beispiel zumindest teilweise basierend auf einer Benutzereingabe eine Versandinformation bestimmt wird. Beispielsweise nachdem eine auf dieser Versandinformation basierende Versandbeschriftung bereitgestellt wurde (z.B. von Druckmitteln des Messmoduls), kann ein Einlagern der Sendung in eine Fachanlage (z.B. in ein Fach der Fachanlage) für das Versenden der Sendung gemäß der Versandinformation erfolgen. Ein solches Einlagern kann von der Steuereinheit des Messmoduls auf verschiedene Weisen bewirkt werden.

Zum Beispiel umfasst eine Fachanlage eine Vielzahl von Fächern (also beispielsweise mehr als ein Fach oder mehr als zwei Fächer). Die Fächer sind beispielsweise zur Aufnahme von Sendungen (z.B. Briefe, Pakete, Päckchen) oder Lieferungen oder Gegenständen (z.B. Wertgegenstände, Gepäck, etc.) eingerichtet Zumindest einige der Fächer sind jeweils verschließbar, beispielsweise mittels einer jeweiligen Tür oder Klappe. Beispielsweise handelt es sich bei den Fächern um im Wesentlichen quaderförmige Aufnahmebehältnisse, die an einer oder mehreren Seiten mit Türen oder Klappen versehen sind. Beispielsweise sind in der Fachanlage mehrere Fächer übereinander und/oder nebeneinander angeordnet Beispielsweise kann die Fachanlage aus einem oder mehreren nebeneinander angeordneten Modulen bestehen, wobei in jedem Modul eines oder mehrere Fächer übereinander angeordnet sind. Die jeweiligen Türen der Fächer sind dann beispielsweise seitlich angeschlagen und lassen sich beispielsweise nach vorne öffnen. Die Fächer der Fachanlage können alle die gleiche Größe aufweisen. Alternativ können zumindest einige Fächer der Fachanlage unterschiedliche Größen aufweisen. Die Fachanlage kann beispielsweise Fächer für Briefe (Brieffächer) und/oder Fächer für Pakete (Paketfächer) aufweisen. Die Brieffächer weisen beispielsweise innerhalb der Fachanlage jeweils die gleiche Größe auf, allerdings sind auch zwei oder mehr unterschiedliche Größen möglich. Die Paketfächer können in der Fachanlage mit lediglich einer gleichen oder mit unterschiedlichen Größen vertreten sein. Die Fachanlage kann beispielsweise als Paketfachanlage, kombinierte Brief- und Paketfachanlage, Paketstation, Packstation oder Poststation ausgebildet sein.

Das Schloss eines jeweiligen Fachs ist beispielsweise steuerbar, insbesondere in elektronischer Form. Insbesondere kann zumindest der Prozess des Verriegelns und/oder Entriegelns des Schlosses gesteuert werden. Die Steuerung des Schlosses eines Fachs kann beispielsweise durch eine Schlosssteuereinheit erfolgen, wobei beispielsweise alle Schlosssteuereinheiten oder diejenigen eines oder mehrerer Module der Fachanlage, beispielsweise durch eine übergeordnete Steuereinheit der Fachanlage gesteuert werden.

Neben solchen Fächern der Fachanlage, die von außen (z.B. für einen Benutzer von einer Front der Fachanlage aus) zugänglich sind, kann die Fachanlage auch weitere Fächer umfassen, welche sich in einem Innenraum der Fachanlage befinden. Ein solches (z.B. innenliegendes) Fach im Innenraum der Fachanlage kann beispielsweise genutzt werden, um eine in dem Messmodul eingelegte Sendung zum Einlagern in die Fachanlage (z.B. in ein solches Fach im Innenraum der Fachanlage) zu transportieren.

In einer beispielhaften Ausführungsform gemäß dem ersten Aspekt umfasst das Bewirken des Einlagerns der Sendung ferner:
- Bewirken des Transportierens der Sendung aus dem Messmodul in die Fachanlage; oder
- Bewirken des Öffnens des Messmoduls, wobei die Sendung aus dem geöffneten Messmodul entnommen und in ein zumindest teilweise basierend auf der bereitgestellten Messinformation bestimmtes Fach der Fachanlage eingelegt wird.

Zum Beispiel wird eine in das Messmodul eingelegte Sendung anhand von Transportmitteln des Messmoduls aus dem Fach des Messmoduls heraus in die Fachanlage, insbesondere in ein Fach der Fachanlage (z.B. ein innenliegendes Fach der Fachanlage) transportiert Dies ist beispielsweise der Fall, wenn das Messmoduls als Teil der Fachanlage in die Fachanlage integriert ist und derart in die Fachanlage eingebaut ist, sodass eine Transportverbindung zwischen dem Messmodul und zumindest einem Fach der Fachanlage besteht Die Transportmittel des Messmoduls können zum Beispiel durch ein Förderband innerhalb des Fachs des Messmoduls gegeben sein, auf welchem sich die in das Messmodul eingelegte Sendung befindet und mit dem sich die Sendung bei Bewegung des Förderbandes aus dem Messmodul in ein Fach der Fachanlage bewegen lässt

Ein Bewirken des Transportierens der Sendung kann beispielsweise so verstanden werden, dass das Transportieren durch die Steuereinheit des Messmoduls bewirkt wird. Zum Bewirken des Transportierens kann beispielsweise die Steuereinheit des Messmoduls die Transportmittel des Messmoduls ansteuern (z.B. mittels eines elektrischen Signals), sodass die Transportmittel die Sendung in ein Fach der Fachanlage bewegen.

Im Anschluss an das Transportieren kann zum Beispiel die Fachanlage oder das Messmodul mittels jeweiliger Druckmittel einen Einlieferungsbeleg (z.B. an den Benutzer) ausgeben, welcher dem Nachweis der Einlagerung der Sendung in die Fachanlage dient

In einem anderen Beispiel umfasst das Einlagern der Sendung das Öffnen des Messmoduls. Nach dem Öffnen kann die Sendung (z.B. von einem Benutzer, welcher die Sendung einlagern und versenden möchte) aus dem geöffneten Messmodul entnommen werden und in ein zumindest teilweise basierend auf der bereitgestellten Messinformation bestimmtes Fach der Fachanlage eingelegt werden. In diesem Beispiel wird das Einlagern insoweit bewirkt, als das Öffnen des Messmoduls dem Benutzer die Entnahme der Sendung ermöglicht (und den Benutzer z.B. zur Entnahme veranlasst). In diesem Fall ist das Messmodul beispielsweise ein Teil der Fachanlage (und z.B. in die Fachanlage integriert), oder das Messmodul ist nahe der Fachanlage platziert, sodass ein Benutzer zum Einlagern der Sendung die Sendung dem Messmodul entnehmen und diese komfortabel in ein Fach der Fachanlage einlegen kann.

Ein Fach der Fachanlage, in welches die Sendung eingelegt wird, kann beispielsweise zumindest teilweise basierend auf der bereitgestellten Messinformation (und z.B. zusätzlich auf einer oder mehreren weiteren Messinformationen) bestimmt werden. Zum Beispiel wird an dem Backend-Server, nachdem die Messinformation von dem Messmodul an den Backend-Server übermittelt wurde, basierend auf der von der Messinformation repräsentierten Größe und/oder des von der Messinformation repräsentierten Gewichts ein Fach der Fachanlage bestimmt (z.B. aus einer Mehrzahl von Fächern ausgewählt), welches aufgrund der Größe des Fachs zur Aufnahme der Sendung geeignet ist. Hierzu liegen am Backend-Server beispielsweise Informationen über die Anzahl, Größe und/oder aktuelle Belegung der Fächer von einer oder mehreren Fachanlage vor.

In einer beispielhaften Ausführungsform gemäß dem ersten Aspekt umfasst das Bewirken des Einlagerns der Sendung ferner:
- wenn zumindest teilweise basierend auf der bereitgestellten Messinformation bestimmt wird, dass die Sendung eine Briefsendung ist, Bewirken des Transportierens der Sendung aus dem Messmodul in die Fachanlage; und
- wenn zumindest teilweise basierend auf der bereitgestellten Messinformation bestimmt wird, dass die Sendung eine Paketsendung ist, Bewirken des Öffnens des Messmoduls, wobei die Sendung aus dem Messmodul entnommen und in ein zumindest teilweise basierend auf der bereitgestellten Messinformation bestimmtes Fach der Fachanlage eingelegt wird.

Zum Beispiel weist eine Paketsendung (z.B. ein Paket oder ein Päckchen) ein höheres Gewicht und/oder eine größere Größe auf als eine Briefsendung (z.B. ein Brief), sodass ein solcher Unterschied in Gewicht und/oder Größe beispielsweise durch jeweilige Messinformationen der Briefsendung und Paketsendung repräsentiert wird. Demnach kann zum Beispiel basierend auf der bereitgestellten Messinformation (z.B. vom Backend-Server, an welchen die bereitgestellte Messinformation übertragen wird) bestimmt werden, ob es sich bei der in das Messmodul eingelegten Sendung, von der zumindest ein Messparameter erfasst wurde, um eine Briefsendung oder um eine Paketsendung handelt. Nach dem Bestimmen, ob die eingelegte Sendung eine Paketsendung oder eine Briefsendung ist, kann beispielsweise eine entsprechende Information darüber an der Steuereinheit des Messmoduls erhalten (z.B. durch Übertragung der Information von dem Backend-Server an das Messmodul) werden. Basierend auf dieser erhaltenen Information kann zum Beispiel die Steuereinheit das Transportieren der Briefsendung aus dem Messmodul in die Fachanlage oder das Öffnen des Messmoduls bewirken. Vorteilhafterweise kann so berücksichtigt werden, dass eine Briefsendung wegen des geringeren Gewichts und/oder kleineren Größe verglichen mit einer Paketsendung vorrangig für das Transportieren in die Fachanlage geeignet ist

Zusätzlich zu der zumindest einen Messinformation kann das Bestimmen, ob die Sendung eine Briefsendung oder eine Paketsendung ist, beispielsweise auf einer oder mehreren weiteren Messinformation basieren.

In einer beispielhaften Ausführungsform gemäß dem zweiten Aspekt wird die erhaltene zumindest eine Messinformation von dem Messmodul, von einem Mobilgerät oder von einer Fachanlage erhalten und vor dem Erhalten an dem Messmodul bereitgestellt.

Zum Beispiel wird die zumindest eine Messinformation an dem Backend-Server von dem Messmodul, an welchem die Messinformation bereitgestellt wird, erhalten (z.B. empfangen), wobei hier wie oben bezüglich des Verfahrens gemäß dem ersten Aspekt beschrieben verschiedene Übertragungswege möglich sind und diese verschiedenen Übertragungswege zum Beispiel von den technischen Gegebenheiten des Messmoduls abhängen. Gemäß einem Beispiel kann die zumindest eine Messinformation von der Steuereinheit des Messmoduls unmittelbar (z.B. ohne ein Mobilgerät oder eine Komponente einer Fachanlage als zusätzliche Instanz im Übertragungsweg) an den Backend-Server übertragen werden. Gemäß einem weiteren Beispiel kann die zumindest eine Messinformation von der Steuereinheit des Messmoduls zunächst bereitgestellt und an eine Fachanlage (z.B. an eine Steuereinheit der Fachanlage) übertragen werden, wobei die übertragene Messinformation anschließend von der Fachanlage (z.B. der Steuereinheit der Fachanlage) an den Backend-Server weitergeleitet wird. Gemäß einem weiteren Beispiel kann die zumindest eine Messinformation von der Steuereinheit des Messmoduls zunächst bereitgestellt und an ein Mobilgerät übertragen werden, wobei die übertragene Messinformation anschließend von dem Mobilgerät an den Backend-Server weitergeleitet wird.

In einer beispielhaften Ausführungsform umfasst das Verfahren gemäß dem zweiten Aspekt ferner:
- Erhalten einer weiteren Messinformation, wobei die weitere Messinformation zumindest eine Größe der in das Messmodul eingelegten Sendung repräsentiert, wobei die weitere Messinformation zumindest teilweise auf zumindest einem weiteren Messparameter der Sendung basiert, wobei der zumindest eine weitere Messparameter der Sendung von einer Kameraeinheit der Fachanlage erfasst wird und wobei das Bestimmen zumindest einer Versandoption für ein Versenden der Sendung zumindest teilweise auf der zumindest einen Messinformation und der weiteren Messinformation basiert

Zum Beispiel wird die weitere Messinformation an einer Fachanlage oder an einem Backend-Server erhalten, sodass nach dem Erhalt an der Fachanlage oder an dem Backend-Server zumindest teilweise basierend auf der weiteren Messinformation zumindest eine Versandoption für ein Versendung der Sendung bestimmt werden kann. Das Erhalten einer weiteren Messinformation soll beispielsweise so verstanden werden, dass diese weitere Messinformation zusätzlich zu der zumindest einen Messinformation erhalten wird und insgesamt demnach zumindest zwei Messinformationen erhalten werden.

Zum Beispiel wird die zumindest eine Messinformation von dem Messmodul bereitgestellt und von dort an den Backend-Server übertragen und die weitere Messinformation wird von der Fachanlage bereitgestellt und von dort an den Backend-Server übertragen. Zum Beispiel repräsentiert die zumindest eine Messinformation ein Gewicht der eingelegten Sendung und die weitere Messinformation repräsentiert eine Größe der eingelegten Sendung.

Nach dem Erhalten der zumindest einen Messinformation und der weiteren Messinformation kann beispielsweise zumindest teilweise basierend auf der zumindest einen Messinformation und der weiteren Messinformation zumindest eine Versandoption bestimmt werden. Dazu kann beispielsweise eine von der zumindest einen Messinformation repräsentierte Größe (zusätzlich oder alternativ ein repräsentiertes Gewicht) der Sendung und eine von der weiteren Messinformation repräsentierte Größe (zusätzlich oder alternativ ein repräsentiertes Gewicht) der Sendung berücksichtigt werden, beispielsweise durch Mittelung der beiden repräsentierten Größen (zusätzlich oder alternativ der repräsentierten Gewichte). Zum Beispiel kann dann basierend auf einer gemittelten Größe (zusätzlich oder alternativ auf einem gemittelten Gewicht) zumindest eine Versandoption bestimmt werden, welche für das Versenden einer Sendung dieser gemittelten Größe (zusätzlich oder alternativ des gemittelten Gewichts) angeboten werden.

Die weitere Messinformation repräsentiert insbesondere eine Größe (und z.B. kein Gewicht) der in das Messmodul eingelegten Sendung. Dazu kann die weitere Messinformation beispielsweise zumindest teilweise basierend auf zumindest einem weiteren Messparameter der Sendung bestimmt werden, welcher von der Größe der Sendung abhängt. Dazu kann der zumindest eine weitere Messparameter zum Beispiel von einer Kameraeinheit der Fachanlage erfasst werden, wobei von dieser Kameraeinheit ein oder mehrere Bilder (z.B. mit deren Bildinformationen als beispielhafte Messparameter) der Sendung erfasst werden und diese Bilder durch eine Auswertung ein Bestimmen einer Größe der Sendung ermöglichen. Zum Beispiel kann die Kameraeinheit der Fachanlage über Sensoren oder Module (z.B. eine Infrarotkamera und ein Infrarotprojektor) zur Erfassung eines dreidimensionalen Abbildes der Sendung verfügen, wobei dieses dreidimensionale Abbild durch erfasste Messparameter gegeben sein kann und ein Bestimmen der Größe der Sendung ermöglicht

Die Kameraeinheit der Fachanlage ist beispielsweise ein Teil der Fachanlage und zum Beispiel an der Front der Fachanlage angebracht. Beispielsweise dient diese Kameraeinheit vorrangig anderen Zwecken als der oben beschriebenen Erfassung eines Messparameters, wie zum Beispiel einer Überwachung der Fachanlage oder einer Identifizierung eines Benutzers der Fachanlage. Zum Beispiel kann der zumindest eine weitere Messparameter, auf welchem basierend die weitere Messinformation bestimmt wird, erfasst werden, bevor die Sendung in das Messmodul eingelegt wird, wobei zum Beispiel der zumindest eine Messparameter, auf welchem basierend die zumindest eine Messinformation bestimmt wird, erfasst wird, nachdem die Sendung in das Messmodul eingelegt wurde und während sich die Sendung im Messmodul befindet.

Zum Beispiel repräsentiert die zumindest eine Messinformation ein Gewicht der Sendung und die weitere Messinformation repräsentiert eine Größe der Sendung. In diesem Fall kann vorteilhafterweise das Messmodul dazu genutzt werden, das Gewicht der Sendung zu ermitteln, während eine an der Fachanlage angebrachte Kameraeinheit genutzt werden kann, die Größe der Sendung zu ermitteln. Somit kann die beispielsweise auch zu anderen Zwecken an der Fachanlage vorhandene Kameraeinheit für die Größenbestimmung genutzt werden, sodass das Messmodul keine eigene Kameraeinheit für die Größenbestimmung erfordert und beispielsweise nur mit einer Waage ausgestattet sein kann, um das Gewicht der Sendung zu ermitteln.

In einer beispielhaften Ausführungsform umfasst das Verfahren gemäß dem zweiten Aspekt ferner:
- Bestimmen, zumindest teilweise basierend auf der zumindest einen Versandoption und einer Benutzereingabe, einer Versandinformation für das Versenden der Sendung.

Ein Bestimmen einer Versandinformation zumindest teilweise basierend auf der zumindest einen Versandoption kann zumindest teilweise durch den Backend-Server erfolgen, an dem die Versandinformation bestimmt wird. Zum Beispiel kann das Bestimmen das Übertragen der zumindest einen Versandoption an ein Mobilgerät oder an eine Fachanlage umfassen, wobei einem Benutzer beispielsweise auf einem berührungsempfindlichen Bildschirm (z.B. des Mobilgeräts oder der Fachanlage) die zumindest eine bestimmte Versandoption angezeigt wird und der Benutzer über eine Eingabeeinheit (z.B. eine Tastatur oder dem berührungsempfindlichen Bildschirm) zumindest eine der angezeigten Versandoptionen auswählt Nachdem zum Beispiel durch diese Auswahl einer Versandoption eine Versandinformation bestimmt wurde, kann diese Versandinformation von dem Mobilgerät oder von der Fachanlage an den Backend-Server zurückgesendet werden.

In einer beispielhaften Ausführungsform zeigt die Versandinformation zumindest eine aus der zumindest einen Versandoption ausgewählte Versandoption und weiterhin einen Versandkostenbetrag der zumindest einen ausgewählten Versandoption an, und umfasst das Verfahren gemäß dem zweiten Aspekt insbesondere ferner:
- Bestimmen, zumindest teilweise basierend auf einer von dem Messmodul erhaltenen Frankierungsinformation und dem Versandkostenbetrag der ausgewählten Versandoption, ob die Sendung ausreichend frankiert ist

Wie oben beschrieben kann beispielsweise ein Benutzer eine oder mehrere der bestimmten Versandoptionen auswählen und somit eine Versandinformation bestimmen, wobei die Versandinformation die eine oder die mehreren ausgewählten Versandoptionen anzeigt (z.B. repräsentiert). Beispielsweise ist der zumindest einen ausgewählten Versandoption ein Versandkostenbetrag zugeordnet, wobei dieser Versandkostenbetrag der ausgewählten Versandoption für das Versenden der Sendung gemäß der ausgewählten Versandoption fällig wird. Zum Beispiel wird der Versandkostenbetrag der ausgewählten Versandoption an dem Backend-Server bestimmt, an dem die Versandinformation bestimmt wird. Die Versandinformation zeigt dann zum Beispiel zusätzlich zu der ausgewählten Versandoption auch den Versandkostenbetrag der ausgewählten Versandinformation an. Vorteilhafterweise wird für das Bestimmen des Versandkostenbetrags sowohl die vom Messmodul bereitgestellte Messinformation, als auch die vom Benutzer ausgewählte Versandoption als Grundlage genutzt, sodass der Versandkostenbetrag flexibel und beispielsweise nicht bereits durch die Messinformation allein bestimmt wird. Zum Beispiel kann der Versandkostenbetrag der ausgewählten Versandoption anschließend dem Benutzer in Rechnung gestellt werden.

In einem weiteren Beispiel dient der Versandkostenbetrag der ausgewählten Versandoption einem Bestimmen, ob die in das Messmodul eingelegte Sendung ausreichend frankiert ist. Dieses Bestimmen kann beispielsweise durch ein Vergleichen des Versandkostenbetrags der ausgewählten Versandoption mit möglicherweise bereits vorab entrichteten Versandkosten für das Versenden der eingelegten Sendung erfolgen. Diese vorab entrichteten Versandkosten werden beispielsweise durch eine Frankierungsinformation der eingelegten Sendung angezeigt, wobei diese Frankierungsinformation zum Beispiel an dem Messmodul erhalten wird und anschließend an den Backend-Server übertragen wird, wobei an dem Backend-Server bestimmt wird, ob die Sendung ausreichend frankiert ist (z.B. ob die vorab entrichteten Versandkosten die Versandkosten der ausgewählten Versandoption decken). Zum Beispiel kann eine mögliche Nachfrankierung dem Benutzer anschließend in Rechnung gestellt werden.

In einer beispielhaften Ausführungsform umfasst das Verfahren gemäß dem zweiten Aspekt ferner:
- Bestimmen, zumindest teilweise basierend auf der erhaltenen zumindest einen Messinformation, eines Fachs der Fachanlage; und
- Bewirken des Öffnens des bestimmten Fachs der Fachanlage.

Zum Beispiel wird das Bestimmen eines Fachs der Fachanlage zumindest teilweise basierend auf der an dem Backend-Server erhaltenen zumindest einen Messinformation von dem Backend-Server durchgeführt Wie oben hinsichtlich des Verfahrens gemäß dem ersten Aspekt beschrieben wird zum Beispiel an dem Backend-Server, nachdem die Messinformation von dem Messmodul an den Backend-Server übermittelt wurde, basierend auf der von der Messinformation repräsentierten Größe und/oder des von der Messinformation repräsentierten Gewichts ein Fach der Fachanlage bestimmt (z.B. aus einer Mehrzahl von Fächern ausgewählt), welches aufgrund der Größe des Fachs zur Aufnahme der Sendung geeignet ist Hierzu liegen am Backend-Server beispielsweise Informationen über die Anzahl, Größe und/oder aktuelle Belegung der Fächer von einer oder mehreren Fachanlagen vor. Das Bestimmen eines Fachs der Fachanlage kann beispielsweise ein Prüfen umfassen, ob ausgehend von der von der Messinformation repräsentierten Größe und/oder des von der Messinformation repräsentierten Gewichts ein Fach der Fachanlage zur Verfügung steht, welches aufgrund der Größe des Fachs zur Aufnahme der Sendung geeignet ist So kann beispielsweise geprüft werden, ob die Fachanlage ein entsprechendes Fach grundsätzlich aufweist und/oder ob ein solches Fach zum gegenwärtigen Zeitpunkt unbelegt ist Vorteilhafterweise kann so auf Grundlage der Messinformation eine Kapazitätsprüfung der Fachanlage erfolgen.

Darüber hinaus kann das Bestimmen eines Fachs der Fachanlage neben der erhaltenen zumindest einen Messinformation zusätzlich auf einer weiteren erhaltenen Messinformation basieren.

Nach dem Bestimmen eines Fachs der Fachanlage kann beispielsweise durch den Backend-Server ein Öffnen des bestimmten Fachs der Fachanlage bewirkt werden, indem von dem Backend-Server eine Kennung des bestimmten Fachs an eine Steuereinheit der Fachanlage, zu welcher das bestimmte Fach gehört, übertragen wird. Diese Steuereinheit kann beispielsweise anschließend das Öffnen des bestimmten Fachs bewirken (z.B. durch Ansteuern einer entsprechenden Schlosssteuereinheit), wobei dieses Öffnen als Teil der Einlagerung der Sendung in die Fachanlage angesehen werden kann (z.B. legt ein Benutzer die dem Messmodul entnommene Sendung in das geöffnete Fach ein).

In einer beispielhaften Ausführungsform gemäß den verschiedenen Aspekten umfasst das Messmodul zumindest einen Sensor für ein Erfassen des zumindest einen Messparameters der Sendung, wobei der zumindest eine Messparameter der Sendung von dem zumindest einen Sensor erfasst wird, während sich die Sendung in dem Messmodul befindet. Zum Beispiel ist das Fach des Messmoduls während des Erfassens des Messparameters geöffnet oder geschlossen (z.B. verriegelt).

In einer beispielhaften Ausführungsform gemäß den verschiedenen Aspekten ist das Messmodul ein Teil der Fachanlage. Dies kann beispielsweise so verstanden werden, dass das Messmodul in die Fachanlage integriert (z.B. in der Fachanlage installiert ist), sodass das Messmodul für einen Benutzer der Fachanlage komfortabel zugänglich ist. Beispielsweise kann das Messmodul als Teil der Fachanlage mit der Steuereinheit der Fachanlage verbunden sein, um Information wie beispielsweise eine bereitgestellte Messinformation an die Steuereinheit der Fachanlage zu übertragen. In einem anderen Beispiel ist das Messmodul zwar Teil der Fachanlage und in dieser installiert, aber nicht mit der Steuereinheit der Fachanlage verbunden. Alternativ oder zusätzlich kann das Messmodul als Teil der Fachanlage beispielsweise mit einer Stromversorgung der Fachanlage verbunden sein. Zum Beispiel kann das Messmodul als Teil einer Fachanlage nachträglich in die Fachanlage integriert werden (z.B. um die Fachanlage nachträglich um das Messmodul zu ergänzen).

In einer weiteren beispielhaften Ausführungsform gemäß den verschiedenen Aspekten ist das Messmodul kein Teil der Fachanlage und beispielsweise nicht in die Fachanlage integriert und/oder beispielsweise ohne Kommunikationsverbindung mit der Fachanlage ausgestaltet In einem solchen Fall kann das Messmodul in der Nähe oder beispielsweise neben der Fachanlage platziert (z.B. aufgestellt) werden, um einem Benutzer eine komfortable Ermittlung der möglichen Versandoptionen für eine zu versendende Sendung zu ermöglichen, bevor der Benutzer die Sendung in die Fachanlage einlagert

In einer beispielhaften Ausführungsform ist die Vorrichtung gemäß dem ersten Aspekt eine Steuereinheit des Messmoduls. Wie bereits beschrieben können die Schritte des Verfahrens gemäß dem ersten Aspekt von einer Steuereinheit des Messmoduls ausgeführt werden, wobei die Steuereinheit des Messmoduls als Komponente des Messmoduls zu verstehen ist. In einem weiteren Beispiel kann das Messmodul nicht über eine eigene Steuereinheit verfügen, sodass beispielsweise die Steuereinheit einer Fachanlage oder ein Backend-Server das Verfahren gemäß dem ersten Aspekt ausführt und als Vorrichtung gemäß dem ersten Aspekt zu verstehen ist. Beispielsweise übernimmt dann die Steuereinheit der Fachanlage oder der Backend-Server die Aufgaben und Funktionen der oben beschriebenen Steuereinheit des Messmoduls.

In einer beispielhaften Ausführungsform ist die Vorrichtung gemäß dem zweiten Aspekt eine Steuereinheit der Fachanlage oder der Backend-Server. Wie oben beschrieben können die Schritte des Verfahrens gemäß dem zweiten Aspekt von einer Steuereinheit der Fachanlage oder dem Backend-Server ausgeführt werden.

Gemäß einem weiteren Aspekt der vorliegenden Offenbarung wird ein System offenbart, welches zumindest die Vorrichtung gemäß dem ersten Aspekt und die Vorrichtung gemäß dem zweiten Aspekt umfasst.

Beispielsweise handelt es sich bei der Vorrichtung gemäß dem ersten Aspekt um die Steuereinheit des Messmoduls und bei der Vorrichtung gemäß dem zweiten Aspekt um eine Steuereinheit der Fachanlage oder den Backend-Server. Zum Beispiel kann das System weitere Vorrichtungen und/oder Komponenten von Vorrichtungen umfassen, wie beispielsweise zumindest ein Messmodul, zumindest eine Fachanlage oder zumindest ein Mobilgerät (z.B. ein Mobiltelefon eines Benutzers, welcher eine Sendung einlagern möchte).

Die oben beschriebenen Ausführungsbeispiele und beispielhaften Ausgestaltungen aller Aspekte der vorliegenden Offenbarung sollen auch in allen Kombinationen miteinander offenbart verstanden werden. Insbesondere gilt die Offenbarung eines Verfahrensschrittes auch als Offenbarung von Mitteln zur Durchführung des jeweiligen Verfahrensschritts. Ebenso gilt die Offenbarung von Mitteln zur Durchführung eines Verfahrensschritts auch als Offenbarung des Verfahrensschritts selbst.

Weitere vorteilhafte beispielhafte Ausgestaltungen der vorliegenden Offenbarung sind der folgenden detaillierten Beschreibung einiger beispielhafter Ausführungsformen insbesondere in Verbindung mit den Figuren zu entnehmen. Die beiliegenden Figuren sollen jedoch nur dem Zwecke der Verdeutlichung, nicht aber zur Bestimmung des Schutzbereiches der Ansprüche dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1a und 1b: schematische Darstellungen beispielhafter Ausführungsformen eines Messmoduls gemäß den verschiedenen Aspekten der vorliegenden Offenbarung;
- Fig. 2: eine schematische Darstellung einer beispielhaften Ausführungsform einer Fachanlage gemäß den verschiedenen Aspekten der vorliegenden Offenbarung;
- Fig. 3: eine schematische Darstellung einer beispielhaften Ausführungsform einer Steuereinheit eines Messmoduls gemäß den verschiedenen Aspekten der vorliegenden Offenbarung;
- Fig. 4: eine schematische Darstellung einer beispielhaften Ausführungsform einer Steuereinheit einer Fachanlage gemäß den verschiedenen Aspekten der vorliegenden Offenbarung;
- Fig. 5: eine schematische Darstellung einer beispielhaften Ausführungsform eines Backend-Servers gemäß den verschiedenen Aspekten der vorliegenden Offenbarung;
- Fig. 6: eine schematische Darstellung einer beispielhaften Ausführungsform eines Systems gemäß einem weiteren Aspekt der vorliegenden Offenbarung;
- Fig. 7: ein Flussdiagramm einer bespielhaften Ausführungsform eines Verfahrens gemäß dem ersten Aspekt der vorliegenden Offenbarung;
- Fig. 8: ein Flussdiagramm einer bespielhaften Ausführungsform eines Verfahrens gemäß dem zweiten Aspekt der vorliegenden Offenbarung; und
- Fig. 9: beispielhafte Ausführungsformen von Speichermedien.

### Detaillierte Beschreibung einiger beispielhafter Ausführungsformen

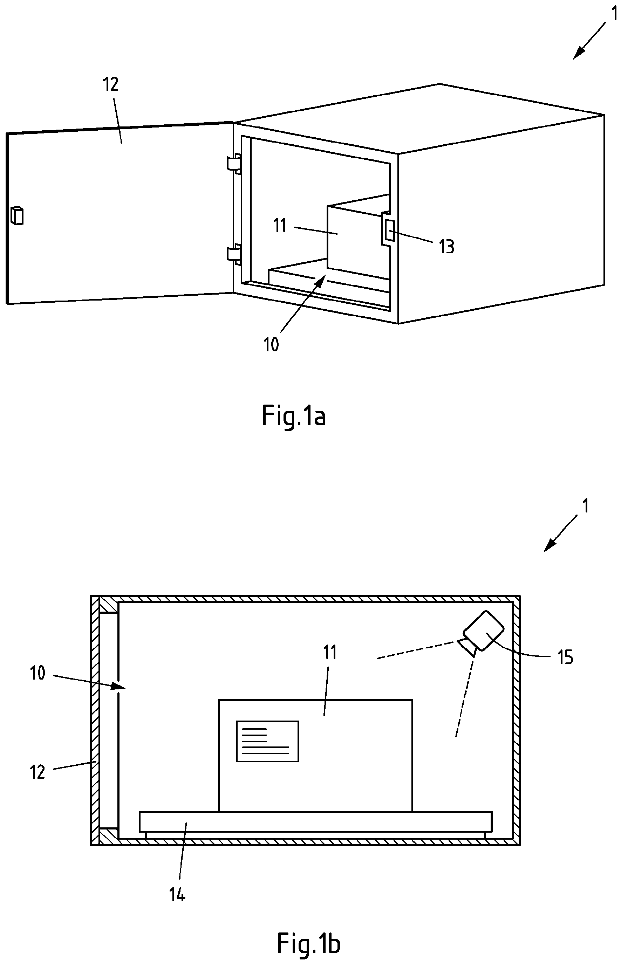

Fig. 1a und Fig. 1b zeigen schematische Darstellungen beispielhafter Ausführungsformen eines Messmoduls 1 gemäß den verschiedenen Aspekten der vorliegenden Offenbarung.

Fig. 1a zeigt dabei eine perspektivische Außenansicht des Messmoduls 1 und Fig. 1b zeigt einen Querschnitt durch das Messmodul 1.

Das Messmodul 1 umfasst beispielsweise zumindest ein Fach 10 eingerichtet zur Aufnahme von zumindest einer Sendung 11 (z.B. einem Brief, Paket oder Päckchen). Ein solches Fach 10 des Messmoduls ist verriegelbar (z.B. verschließbar), beispielsweise mittels einer Tür 12.

Eine Verriegelbarkeit des Messmoduls 1 in beispielhaft durch ein Schloss 13 der Tür 12 gegeben, um den Zugang von Benutzern zum Fach 10 und damit zur Benutzung des Messmoduls 1 kontrollieren zu können. Das Schloss 13 des Fachs 10 kann beispielsweise standardmäßig in eine Verriegelungsposition zurückkehren und dann beispielsweise nur zur Entriegelung ansteuerbar sein. Nach erfolgter Entriegelung des Schlosses 13 kann dann beispielsweise die Tür 12 des Fachs 10 geöffnet werden. Da das Schloss 13 automatisch in die Verriegelungsposition zurückkehrt, kann eine Verriegelung des Fachs 10 durch Schließen der Tür 12 erzielt werden, beispielsweise in dem beim Schließen der Tür 12 eine Fallenfunktion des Schlosses 13 ausgenutzt wird.

Zum Beispiel kann das Fach 10 des Messmoduls 1 entweder offen oder geschlossen sein. Im offenen Zustand des Fachs 10 ist das Schloss 13 des Fachs 10 entriegelt. Die Tür 12 des Fachs 10 kann dann beispielsweise ohne Gewaltanwendung durch eine Person geöffnet werden oder steht offen (Fig. 1a zeigt beispielhaft eine geöffnete Tür 12). Im geschlossenen Zustand des Fachs 10 ist das Schloss 13 des Fachs 10 hingegen verriegelt (Fig. 1b zeigt beispielhaft eine geschlossene Tür 12). Die Tür 12 des Fachs 10 kann dann beispielsweise nicht mehr ohne Gewaltanwendung durch eine Person geöffnet werden, die nicht zur Öffnung berechtigt ist

Das Schloss 13 des Fachs 10 des Messmoduls 1 ist beispielsweise steuerbar, insbesondere in elektronischer Form. Insbesondere kann zumindest der Prozess des Schließens (z.B. des Verriegelns) und/oder des Öffnens (z.B. des Entriegelns) des Schlosses gesteuert (z.B. bewirkt) werden. Die Steuerung des Schlosses 13 des Fachs 10 kann beispielsweise durch eine vom Messmodul 1 umfassten Schlosssteuereinheit erfolgen, wobei die Schlosssteuereinheit des Messmoduls beispielsweise durch eine übergeordnete Steuereinheit des Messmoduls 1 (nicht sichtbar in Fig. 1a und Fig. 1b) gesteuert wird.

Das Messmodul 1 umfasst zum Beispiel neben zumindest einem Fach 10 und einer Steuereinheit zumindest einen Sensor, welcher dazu eingerichtet ist, zumindest einen Messparameter der in das Messmodul 1 eingelegten Sendung 11 zu erfassen. Insbesondere wird der zumindest eine Messparameter der eingelegten Sendung 11 erfasst, während sich die Sendung 11 in dem Messmodul 1 befindet (wie in Fig. 1b gezeigt). Ein Messparameter einer in das Messmodul 1 eingelegten Sendung 11 kann dabei als ein Messparameter verstanden werden, welcher beispielsweise von einer Größe (z.B. Länge, Breite, Tiefe und/oder Volumen) und/oder von einem Gewicht der Sendung 11 abhängt und somit zum Beispiel (z.B. bei Verarbeitung des Messparameters bspw. mit weiteren Messparametern der Sendung 11) ein Bestimmen der Größe und/oder des Gewichts der Sendung 11 ermöglicht. Zum Beispiel repräsentiert ein Messparameter Information über ein Gewicht und/oder eine Größe der eingelegten Sendung 11. Ein Messparameter kann beispielsweise ein elektrisches Signal und/oder eine elektrisch übertragene Information sein, welche eine Größe und/oder ein Gewicht der Sendung repräsentiert, sodass die Größe und/oder das Gewicht der Sendung 11 zumindest teilweise basierend auf dem Messparameter bestimmt werden kann.

Der zumindest eine Sensor des Messmodul kann in einem Beispiel durch einen Gewichtssensor gegeben sein, wobei der Gewichtssensor beispielhaft Teil einer im Fach 10 des Messmoduls 1 angeordneten elektronische Waage 14 sein kann. Beispielhaft ist eine solche Waage 14 in den Boden des Fachs 10 eingelassen, sodass das Gewicht der Sendung 11 erfasst wird, wenn sich diese Sendung 11 in dem Fach 10 des Messmoduls 1 befindet In diesem Beispiel zeigt der erfasste Messparameter der eingelegten Sendung 11 in Form eines elektrischen Signals der elektronischen Waage 14 das Gewicht der eingelegten Sendung 11 an.

Alternativ oder zusätzlich zum einem Gewichtssensor kann das Messmodul 1 weitere Sensoren zum Erfassen eines Messparameters einer Sendung umfassen. Zum Beispiel umfasst das Messmodul einen oder mehrere optische oder optoelektronische Sensoren, welche Information bezüglich der Größe einer in das Fach 10 des Messmoduls 1 eingelegten Sendung 11 erfassen. In einem weiteren Beispiel kann das Messmodul 1 eine oder mehrere Kameras 15 umfassen, die jeweils ein oder mehrere Bilder (z.B. mit deren Bildinformationen als beispielhafte Messparameter) der eingelegten Sendung 11 erfassen, wobei beispielsweise eine Auswertung des einen oder der mehreren Bilder ein Bestimmen einer Größe der Sendung 11 ermöglicht

In weiteren Beispielen kann das Messmodul 1 weitere Sensoren (z.B. magnetische, kapazitive, und/oder induktive Sensoren) umfassen, welche zum Erfassen eines Messparameters der Sendung 11 eingerichtet sind.

Zum Beispiel können die Sensoren des Messmoduls 1 weiterhin dazu genutzt werden, ein Postwertzeichen (z.B. eine Briefmarke, ein Freistempel und/oder Barcode) zu erfassen, welches sich auf der eingelegten Sendung 11 befindet Zum Beispiel zeigt das erfasste Postwertzeichen eine Frankierung der eingelegten Sendung 11 an, indem das erfasste Postwertzeichen beispielsweise anzeigt, ob und in welcher Höhe Versandkosten für das Versenden der eingelegten Sendung 11 (z.B. bereits vor dem Einlegen der Sendung 11 in das Messmodul 1) entrichtet worden sind.

Der zumindest eine Sensor des Messmoduls 1 kann beispielweise von der Steuereinheit (nicht sichtbar in Fig. 1a und Fig. 1b) des Messmoduls gesteuert (z.B. kontrolliert oder angetrieben) werden. Zum Beispiel ist der zumindest eine Sensor drahtlos oder drahtgebunden mit der Steuereinheit des Messmoduls 1 verbunden, sodass die Steuereinheit beispielsweise den zumindest einen Sensor (z.B. mittels eines elektrischen Signals) veranlassen kann, einen Messparameter erfassen. Des Weiteren kann der zumindest eine Sensor beispielsweise einen erfassten Messparameter (z.B. mittels eines elektrischen Signals) an die Steuereinheit des Messmoduls 1 übertragen, wobei die Steuereinheit den erhaltenen Messparameter zum Beispiel verarbeitet und eine Messinformation basierend auf dem erhaltenen Messparameter bestimmt.

Des Weiteren kann das Messmodul 1 weitere Komponenten erfassen, wie zum Beispiel Druckmittel eingerichtet zum Aufdrucken einer Versandbeschriftung auf die in das Messmodul 1 eingelegte Sendung 11. Weiterhin kann das Messmodul 1 Transportmittel umfassen, um die in das Messmodul 1 eingelegte Sendung 11 aus dem Fach 10 heraus in eine Fachanlage zu transportieren. Dies ist beispielsweise der Fall, wenn das Messmodul 1 als Teil der Fachanlage in die Fachanlage integriert ist und derart in die Fachanlage eingebaut ist, sodass eine Transportverbindung zwischen dem Messmodul und zumindest einem Fach der Fachanlage besteht Weiterhin kann das Messmodul 1 Verpackungsmittel (z.B. einen geeigneten Verpackungsmechanismus wie bspw. eine automatische Verpackungsvorrichtung) umfassen, um die in das Messmodul 1 eingelegte Sendung 11 mit einem Verpackungsmaterial (z.B. einem Karton, einer Tüte, einer Folie und/oder einem Umschlag) ganz oder zumindest teilweise zu umhüllen.

Des Weiteren soll verstanden werden, dass das Messmodul 1 (z.B. das Fach 10, die Steuereinheit und/oder der zumindest eine Sensor des Messmoduls 1) für einen dauerhaften Außeneinsatz konzipiert ist. Demnach kann das Messmodul 1 zum Beispiel durch besondere Schutzmaßnahmen dazu eingerichtet sein, beispielsweise Umwelteinflüssen (z.B. wetterbedingte Feuchtigkeit, Hitze, Kälte) oder Vandalismus (z.B. mutwillige Beschädigung oder Manipulation des Messmoduls) zu widerstehen. Beispielsweise kann das Schloss 13 des Fachs 10 des Messmoduls 1 besonders sicher ausgestaltet sein, oder die Tür 12 des Fachs 10 des Messmoduls 1 zum wasserdichten Verschließen des Fachs 10 ausgestaltet sein.

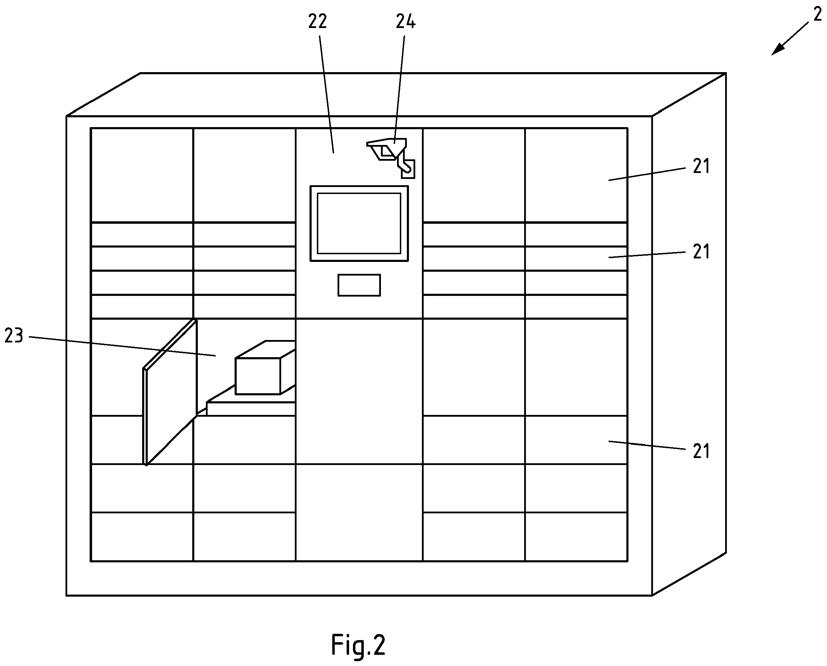

Fig. 2 zeigt eine schematische Darstellung einer beispielhaften Ausführungsform einer Fachanlage 2 gemäß den verschiedenen Aspekten der vorliegenden Offenbarung.

Zum Beispiel umfasst eine Fachanlage 2 eine Vielzahl von Fächern 21 (also beispielsweise mehr als ein Fach oder mehr als zwei Fächer). Die Fächer 21 sind beispielsweise zur Aufnahme von Sendungen (z.B. Briefe, Pakete, Päckchen) oder Lieferungen oder Gegenständen (z.B. Wertgegenstände, Gepäck, etc.) eingerichtet Zumindest einige der Fächer 21 sind jeweils verschließbar, beispielsweise mittels einer jeweiligen Tür oder Klappe. Zumindest einige der Fächer 21 sind beispielsweise mit einem jeweiligen Schloss versehen, um den Zugang von Benutzern zu diesen einzelnen Fächern 21 der Fachanlage 2 kontrollieren zu können.

Das Schloss eines jeweiligen Fachs 21 ist beispielsweise steuerbar, insbesondere in elektronischer Form. Insbesondere kann zumindest der Prozess des Verriegelns und/oder Entriegelns des Schlosses gesteuert werden. Die Steuerung des Schlosses eines Fachs 21 kann beispielsweise durch eine Schlosssteuereinheit erfolgen, wobei beispielsweise alle Schlosssteuereinheiten oder diejenigen eines oder mehrerer Module der Fachanlage 2, beispielsweise durch eine übergeordnete Steuereinheit 22 der Fachanlage 2 gesteuert werden.

Neben solchen Fächern 21 der Fachanlage 2, die von außen (z.B. für einen Benutzer von einer Front der Fachanlage 2 aus) zugänglich sind, kann die Fachanlage 2 auch weitere Fächer umfassen, welche sich in einem Innenraum der Fachanlage 2 befinden (nicht gezeigt in Fig. 2). Ein solches (z.B. innenliegendes) Fach im Innenraum der Fachanlage 2 kann beispielsweise genutzt werden, um eine in dem Messmodul eingelegte Sendung zum Einlagern in die Fachanlage 2 (z.B. in ein solches Fach im Innenraum der Fachanlage 2) zu transportieren.

Wie in Fig. 2 beispielhaft gezeigt kann ein Messmodul 23 (z.B. das in Fig. 1a und Fig. 1b gezeigte Messmodul 1) ein Teil der Fachanlage 2 sein. Beispielhaft ist das Messmodul 23 in der Fachanlage 2 installiert, sodass das Messmodul 23 für einen Benutzer der Fachanlage 2 komfortabel zugänglich ist. Beispielsweise kann das Messmodul 23 als Teil der Fachanlage 2 mit der Steuereinheit 22 der Fachanlage 2 verbunden sein, um Information wie beispielsweise eine bereitgestellte Messinformation an die Steuereinheit 23 der Fachanlage 2 zu übertragen. In einem anderen Beispiel ist das Messmodul 23 in der Fachanlage 2 installiert, aber nicht mit der Steuereinheit 23 der Fachanlage 2 verbunden. Alternativ oder zusätzlich kann das Messmodul 23 als Teil der Fachanlage 2 beispielsweise mit einer Stromversorgung der Fachanlage 2 verbunden sein. Zum Beispiel kann das Messmodul 23 als Teil einer Fachanlage 2 nachträglich in die Fachanlage 2 integriert werden (z.B. um die Fachanlage 2 nachträglich um das Messmodul 23 zu ergänzen).

Anders als in Fig. 2 beispielhaft gezeigt kann das Messmodul 23 auch kein Teil der Fachanlage 2 sein und beispielsweise nicht in der Fachanlage 2 installiert sein. In einem solchen Fall kann das Messmodul 23 in der Nähe oder beispielsweise neben der Fachanlage 2 platziert (z.B. aufgestellt) werden, um einem Benutzer eine komfortable Ermittlung der möglichen Versandoptionen für eine zu versendende Sendung zu ermöglichen, bevor der Benutzer die Sendung in die Fachanlage 2 einlagert

Wie in Fig. 2 beispielhaft gezeigt kann die Fachanlage 2 eine Kameraeinheit 24 aufweisen, welche vorrangig beispielsweise einer Überwachung der Fachanlage 2 oder einer Identifizierung eines Benutzers der Fachanlage 2 dient Darüber hinaus kann die Kameraeinheit 24 dazu verwendet werden, zumindest einen weiteren Messparameter einer in die Fachanlage 2 einzulagernden Sendung zu erfassen, sodass basierend auf dem zumindest einen weiteren Messparameter eine weitere Messinformation bestimmt werden kann, wobei die weitere Messinformation insbesondere eine Größe der Sendung repräsentiert Zum Beispiel kann die Kameraeinheit 24 der Fachanlage 2 über Sensoren oder Module (z.B. eine Infrarotkamera und ein Infrarotprojektor) zur Erfassung eines dreidimensionalen Abbildes der Sendung verfügen, wobei dieses dreidimensionale Abbild durch erfasste Messparameter gegeben sein kann und ein Bestimmen der Größe der Sendung ermöglicht Beispielsweise kann ein Benutzer eine einzulagernde Sendung vor dem Einlegen der Sendung in das Messmodul 23 in das Bildfeld der Kameraeinheit 24 halten, sodass die Kameraeinheit 24 einen oder mehrere weitere Messparameter der Sendung erfassen kann.

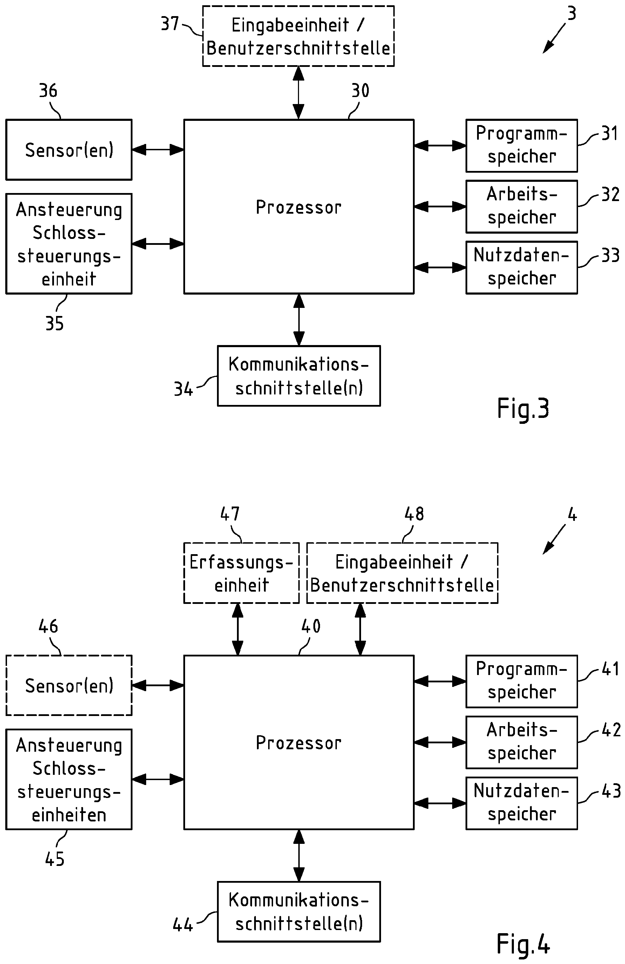

Fig. 3 zeigt eine schematische Darstellung einer beispielhaften Ausführungsform einer Steuereinheit 3 eines Messmoduls (z.B. des in den Figuren 1a und 1b gezeigten Messmoduls 1 oder des in Fig. 2 gezeigten Messmoduls 23) gemäß den verschiedenen Aspekten der vorliegenden Offenbarung.

Die Steuereinheit 3 umfasst beispielhaft einen Prozessor 30, einen Programmspeicher 31, einen Arbeitsspeicher 32, einen Nutzdatenspeicher 33, eine oder mehrere Kommunikationsschnittelle(n) 34, eine Ansteuerungseinheit 35 für ein Schloss oder eine Schlosssteuereinheiten des Fachs des Messmoduls und einen oder mehrere Sensoren 36 (z.B. die in Figuren 1a und 1b gezeigten Sensoren 14, 15 des Messmoduls 1). Eine weitere beispielhafte Komponente der Steuereinheit 3 kann eine optionale Eingabeeinheit/Benutzerschnittstelle 37 sein. Der Prozessor 30 führt beispielsweise ein Programm gemäß dem ersten Aspekt der vorliegenden Offenbarung aus, das in dem Programmspeicher 31 gespeichert ist, beispielsweise als Firmware. Arbeitsspeicher 32 dient insbesondere der Speicherung temporärer Daten während des Ablaufs dieses Programms.

Der Nutzdatenspeicher 33 dient der Speicherung von Daten, die bei der Abarbeitung des Programms erforderlich sind. Vorliegend kann es sich dabei beispielsweise um dem zumindest einen erhaltenen Messparameter handeln, der von der Steuereinheit 3 verwendet wird, um eine Messinformation zu bestimmten. Auch weitere Daten wie beispielsweise die bestimmte Messinformation können beispielsweise im Nutzdatenspeicher 33 gespeichert werden.

Die Kommunikationsschnittstelle(n) 34 umfasst/umfassen beispielsweise eine Schnittstelle zur drahtlosen Kommunikation (z.B. mit einem Mobilgerät), beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). Die Steuereinheit 3 ist beispielsweise ferner zur direkten Kommunikation mit einem Backend-Server eingerichtet, verfügt also beispielsweise über eine Kommunikationsschnittstelle, die einen Zugang zum Internet oder zu einem anderen Netz, an das der Backend-Server angeschlossen ist, ermöglicht.

Die Ansteuerungseinheit 34 ermöglicht es, ein Fach des Messmoduls (z.B. das in Fig. 1a und Fig. 1b gezeigte Fach 10) gezielt zu öffnen oder zu entriegeln, um eine Öffnung zu bewirken, insbesondere durch Ansteuerung des Schlosses des Fachs oder einer Schlosssteuereinheit des Fachs. Zusätzlich oder alternativ kann die Verriegelung des Fachs bewirkt werden. Die Ansteuerungseinheit 35 ist beispielsweise über eine jeweilige Verdrahtung mit dem Schloss oder der Schlosssteuereinheit des Fachs verbunden.

Der zumindest eine Sensor 36 der Steuereinheit 3 eines Messmoduls ist dazu eingerichtet, zumindest einen Messparameter einer in das Messmodul eingelegten Sendung zu erfassen. Insbesondere wird der zumindest eine Messparameter von Sensor 36 erfasst, während sich die Sendung in dem Messmodul befindet (wie z.B. in Fig. 1b gezeigt). Der zumindest eine Sensor 36 kann beispielsweise ein Gewichtssensor, ein optischer oder optoelektronischer Sensor oder eine Kamera sein.

Fig. 4 zeigt eine schematische Darstellung einer beispielhaften Ausführungsform einer Steuereinheit 4 einer Fachanlage (z.B. der in Figur 2 gezeigten Fachanlage 2) gemäß den verschiedenen Aspekten der vorliegenden Offenbarung.

Die Steuereinheit 4 umfasst einen Prozessor 40, einen Programmspeicher 41, einen Arbeitsspeicher 42, einen Nutzdatenspeicher 43, eine oder mehrere Kommunikationsschnittelle(n) 44, eine Ansteuerungseinheit 45 für die Schlösser oder Schlosssteuereinheiten der Fächer der Fachanlage, einen oder mehrere optionale Sensoren 46, eine optionale Erfassungseinheit 47 und eine optionale Eingabeeinheit/Benutzerschnittstelle 48. Der Prozessor 40 führt beispielsweise ein Programm gemäß dem zweiten Aspekt der vorliegenden Offenbarung aus, das in dem Programmspeicher 41 gespeichert ist, beispielsweise als Firmware. Arbeitsspeicher 42 dient insbesondere der Speicherung temporärer Daten während des Ablaufs dieses Programms.

Der Nutzdatenspeicher 43 dient der Speicherung von Daten, die bei der Abarbeitung des Programms erforderlich sind. Vorliegend kann es sich dabei beispielsweise um Informationen handeln, die von der Steuereinheit 4 verwendet werden können, um feststellen zu können, ob eine Zugangsinformation zum Zugang berechtigt. Auch weitere Daten wie beispielsweise eine Messinformation, Versandoption oder Versandinformation können beispielsweise im Nutzdatenspeicher 43 gespeichert werden, z.B. in Datenstrukturen, die auch eine Zuordnung von Zugangsinformationen zu jeweiligen Indikatoren und/oder jeweiligen Fächern repräsentieren.

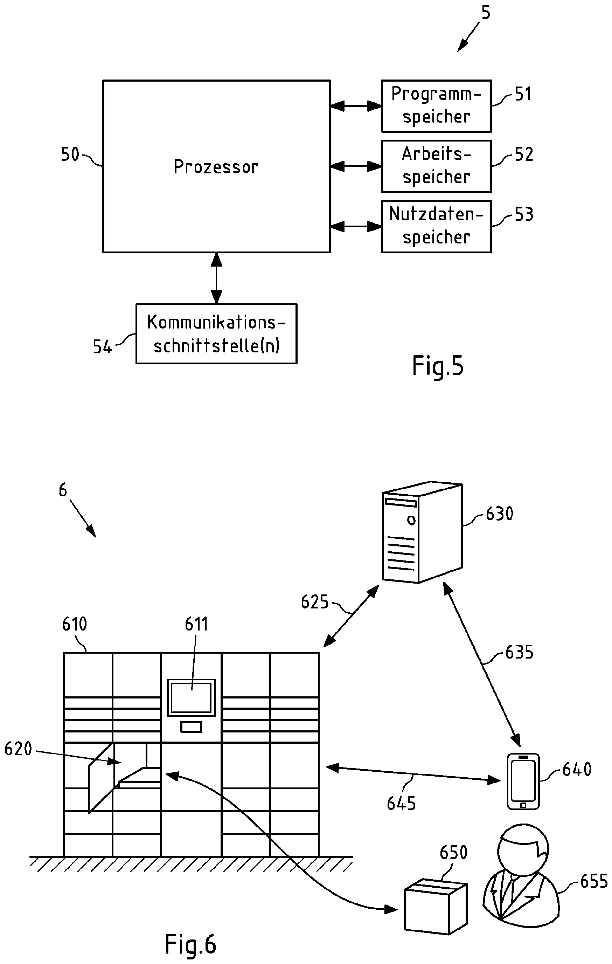

Die Kommunikationsschnittstelle(n) 44 umfasst/umfassen beispielsweise eine Schnittstelle zur drahtlosen Kommunikation, beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). Die Steuereinheit 4 ist beispielsweise ferner zur direkten Kommunikation mit einem Backend-Server (z.B. dem in Fig. 5 gezeigten Backend-Server 5) eingerichtet, verfügt also beispielsweise über eine Kommunikationsschnittstelle, die einen Zugang zum Internet oder zu einem anderen Netz, an das der Backend-Server angeschlossen ist, ermöglicht

Die Ansteuerungseinheit 45 der Steuereinheit 4 einer Fachanlage ermöglicht es, ein einzelnes Fach der Fachanlage gezielt zu öffnen oder zu entriegeln, um die Öffnung zu ermöglichen, insbesondere durch Ansteuerung des Schlosses des Fachs oder eine Schlosssteuereinheit des Fachs. Zusätzlich oder alternativ kann die Verriegelung eines Fachs bewirkt werden. Die Ansteuerungseinheit 45 ist beispielsweise über eine jeweilige Verdrahtung mit allen Schlössern oder Schlosssteuereinheiten der Fachanlage verbunden oder an einen Bus angeschlossen, an dem auch alle Schlösser oder Schlosssteuereinheiten der Fachanlage angebunden sind.

Die Sensoren 46 sind optional und beispielsweise fachspezifisch. Ein Sensor ermöglicht es beispielsweise zu detektieren, ob sich in einem jeweiligen Fach eine jeweilige Sendung befindet und/oder ob in das Fach eine Sendung eingelagert und/oder entnommen wird/wurde. Der gleiche Sensor oder ein weiterer Sensor ermöglicht z.B. die Erfassung von Informationen einer Sendung, beispielsweise indem optisch ein Etikett gescannt oder ein der Sendung zugehöriger NFC-Tag gelesen wird.

Die Erfassungseinheit 47 ist optional und in einer beispielhaften Ausführungsform ein Scanner, welcher optisch Informationen erfassen kann, z.B. einen Bar- oder QR-Code von einem Bildschirm eines Mobilgeräts. In einer weiteren beispielhaften Ausführungsform ist die Erfassungseinheit 47 dazu eingerichtet NFC-Tags zu lesen, die beispielsweise an einer jeweiligen Sendung befestigt und oder in diese eingelegt sind. Die Erfassungseinheit 47 kann zusätzlich oder alternativ in der Lage sein, akustische Signale zu erfassen und zu verarbeiten, also z.B. mittels Spracherkennung.

Die Eingabeeinheit/Benutzerschnittstelle 48 ist optional und zur Kommunikation mit einem Zusteller/Lieferanten und/oder einem Benutzer eingerichtet. Dies kann beispielsweise eine Ausgabeeinheit zum Anzeigen (z.B. über einen Bildschirm oder über fachspezifische Leuchtanzeigen (z.B. zur Darstellung eines jeweiligen Zustands belegt/unbelegt)) oder akustischen Ausgeben von Informationen und/oder eine Einheit zum Erhalten von Informationen und/oder Daten (z.B. eine Tastatur oder einen berührungsempfindlichen Bildschirm mit Bildschirmtastatur oder ein Spracherkennungsmodul) von den Personen umfassen.

Fig. 5 zeigt eine schematische Darstellung einer beispielhaften Ausführungsform eines Backend-Servers 5 gemäß den verschiedenen Aspekten der vorliegenden Offenbarung. Bei dem Backend-Server 5 kann es sich beispielsweise um einen Fachanlagenverwaltungsserver handeln.

Der Backend-Server 5 umfasst einen Prozessor 50, einen Programmspeicher 51, einen Arbeitsspeicher 52, einen optionalen Nutzdatenspeicher 53 sowie eine oder mehrere Kommunikationsschnittelle(n) 54. Der Prozessor führt beispielsweise ein Programm gemäß dem zweiten Aspekt der vorliegenden Offenbarung aus, das in dem Programmspeicher 51 gespeichert ist, beispielsweise als Firmware. Arbeitsspeicher 52 dient insbesondere der Speicherung temporärer Daten während des Ablaufs dieses Programms.

Der Nutzdatenspeicher 53 dient der Speicherung von Daten, die bei der Abarbeitung des Programms erforderlich sind. Vorliegend kann es sich dabei beispielsweise um von einem Messmodul übertragene Messinformation oder eine darauf basierende Versandinformation handeln. Es kann sich aber auch z.B. um Benutzerkennungen und Benutzerkontaktdaten, wie E-Mail-Adressen und Mobilfunknummern, Fachanlagenkennungen und Sendungsdaten handeln. Alle Daten können beispielsweise verschlüsselt gespeichert sein. Im Nutzdatenspeicher 53 können zudem Informationen über eine Vielzahl von Fachanlagen gespeichert sein, beispielsweise eine jeweilige erste Information pro Fachanlage der Vielzahl von Fachanlagen und/oder Ortsinformationen, die beispielsweise einen Standort einer jeweiligen Fachanlage anzeigen. Die erhaltenen und zu übermittelnden Informationen können aber beispielsweise auch nur im Arbeitsspeicher 52 zwischengespeichert werden und sofort nach Übermittlung wieder gelöscht werden.

Die Kommunikationsschnittstelle(n) 54 kann/können zumindest eine Schnittstelle zur Kommunikation mit einer Steuereinheit eines Messmoduls (z.B. der in Fig. 3 gezeigten Steuereinheit 3), mit einer Steuereinheit einer Fachanlage (z.B. der in Fig. 4 gezeigten Steuereinheit 4) oder einem Mobilgerät (z.B. einem Mobiltelefon eines Benutzers, welcher eine Sendung einlagern möchte) eingerichtet sein. Diese Kommunikation kann beispielsweise auf dem Internet Protocol (IP) basieren. Beispielsweise ist dazu zumindest eine der Kommunikationsschnittstelle(n) 54 als Local Area Network (LAN) Schnittstelle ausgeführt.

In den Ausführungsbeispielen der Figuren 3 bis 5 kann der Prozessor 30, 40 oder 50 beispielsweise jeweils eine Kontrolleinheit, ein Mikroprozessor, eine Mikrokontrolleinheit wie ein Mikrocontroller, ein digitaler Signalprozessor (DSP), eine Anwendungsspezifische Integrierte Schaltung (ASICs) oder ein Field Programmable Gate Array (FPGAs) sein. Der Programmspeicher und/oder der Nutzdatenspeicher kann in den Ausführungsbeispielen der Figuren 3 bis 5 beispielsweise ein persistenter Speicher, wie beispielsweise ein Read-Only-Memory (ROM)-Speicher sein. Der Programmspeicher kann beispielsweise fest mit dem jeweiligen Prozessor 30, 40 oder 50 verbunden sein, kann aber alternativ auch lösbar mit dem jeweiligen Prozessor 30, 40 oder 50 verbunden sein, beispielsweise als Speicherkarte, Diskette oder optisches Datenträgermedium (z.B. eine CD oder DVD). Der Arbeitsspeicher der Ausführungsbeispiele der Figuren 3 bis 5 wird beispielsweise zur Speicherung temporärer Ergebnisse während der Abarbeitung der Programmanweisungen genutzt, es handelt sich hierbei beispielsweise um einen flüchtigen Speicher, wie beispielsweise einen Random-Access-Memory (RAM)-Speicher.

Fig. 6 zeigt eine schematische Darstellung einer beispielhaften Ausführungsform eines Systems 6 gemäß einem weiteren Aspekt der vorliegenden Offenbarung, beispielhaft umfassend eine Fachanlage 610 (z. B. die in Fig. 2 gezeigte Fachanlage 2) mit einer Steuereinheit 611 der Fachanlage 610, ein Messmodul 620 (z.B. das in Fig. 1a und Fig. 1b gezeigte Messmodul 1) mit einer Steuereinheit des Messmoduls 620, ein Backend-Server 630 (z.B. den in Fig. 5 gezeigten Backend-Server 5) und ein Mobilgerät 640, welches beispielhaft als Mobiltelefon eines Benutzers 655, welcher eine Sendung 650 in die Fachanlage 610 einlagern möchte, verstanden werden soll.

Die Steuereinheit 611 der Fachanlage 610 ist beispielhaft mit einer oder mehreren Kommunikationsschnittstelle(n) ausgerüstet, die eine Schnittstelle zur drahtlosen Kommunikation mit dem Mobilgerät 640 über eine Kommunikationsverbindung 645 umfasst/umfassen. Die drahtlose Kommunikationsverbindung 645 basiert beispielsweise auf optischer Übertragung und/oder mittels Kommunikation, die auf elektrischen, magnetischen oder elektromagnetischen Signalen oder Feldern beruht, insbesondere Nahbereichs-Kommunikation z.B. beruhend auf Bluetooth oder WLAN.

Die Steuereinheit 611 der Fachanlage 610 ist beispielhaft auch zur Kommunikation mit dem Backend-Server 630 eingerichtet, verfügt also beispielsweise über eine Kommunikationsschnittstelle, die einen Zugang zum Internet oder zu einem anderen Netz, an das der Backend-Server 630 angeschlossen ist, ermöglicht Die Steuereinheit 611 ist also insbesondere zur Fern-Kommunikation eingerichtet, weist also beispielsweise eine Schnittstelle zu einem zellularen Mobilfunksystem, eine DSL-Schnittstelle oder eine Local Area Network (LAN)-Schnittstelle auf, mittels der sie über die Kommunikationsverbindung 625 mit dem Backend-Server 630 kommunizieren kann.

Das Messmodul 620 ist beispielhaft als in der Fachanlage 610 installiert dargestellt Die Steuereinheit des Messmoduls 620 kann beispielsweise als Komponente der Fachanlage 610 innerhalb der Fachanlage 610 mit der Steuereinheit 611 der Fachanlage 610 verbunden sein und kommunizieren, beispielsweise um eine bestimmte Messinformation von der Steuereinheit des Messmoduls 620 an die Steuereinheit 611 der Fachanlage zu übertragen. Hierzu verfügt die Steuereinheit des Messmoduls 620 beispielsweise über eine Kommunikationsschnittstelle, welche für die Kommunikation innerhalb der Fachanlage 610 (z.B. unter den verschiedenen Komponenten der Fachanlage 610) eingerichtet ist.

Zusätzlich oder alternativ ist die Steuereinheit des Messmoduls 620 beispielhaft auch zur Kommunikation mit dem Backend-Server 630 eingerichtet, verfügt also beispielsweise über eine Kommunikationsschnittstelle, die einen Zugang zum Internet oder zu einem anderen Netz, an das der Backend-Server 630 angeschlossen ist, ermöglicht Die Steuereinheit des Messmoduls 620 ist also insbesondere zur Fern-Kommunikation eingerichtet, weist also beispielsweise eine Schnittstelle zu einem zellularen Mobilfunksystem, eine DSL-Schnittstelle oder eine Local Area Network (LAN)-Schnittstelle auf, mittels der sie über die Kommunikationsverbindung 625 mit dem Backend-Server 630 kommunizieren kann. Die Kommunikationsverbindung 625 kann zum Beispiel als Kommunikationsverbindung zwischen der Steuereinheit 611 der Fachanlage 610 und dem Backend-Server 630 oder als Kommunikationsverbindung zwischen der Steuereinheit des Messmoduls 620 und dem Backend-Server 630 verstanden werden.

Zusätzlich oder alternativ ist die Steuereinheit des Messmoduls 620 beispielhaft mit einer oder mehreren Kommunikationsschnittstelle(n) ausgerüstet, die eine Schnittstelle zur drahtlosen Kommunikation mit dem Mobilgerät 640 über eine Kommunikationsverbindung 645 umfasst/umfassen. Die drahtlose Kommunikationsverbindung 645 basiert beispielsweise auf optischer Übertragung und/oder mittels Kommunikation, die auf elektrischen, magnetischen oder elektromagnetischen Signalen oder Feldern beruht, insbesondere Nahbereichs-Kommunikation z.B. beruhend auf Bluetooth oder WLAN. Die Kommunikationsverbindung 645 kann zum Beispiel als Kommunikationsverbindung zwischen der Steuereinheit 611 der Fachanlage 610 und dem Mobilgerät 640 oder als Kommunikationsverbindung zwischen der Steuereinheit des Messmoduls 620 und dem Mobilgerät 640 verstanden werden.

Der Backend-Server 630 kann zum Beispiel eine Vielzahl von Fachanlagen einschließlich der Fachanlage 610 und/oder eine Vielzahl von Benutzern einschließlich des Benutzers 655 verwalten und/oder mit ihnen kommunizieren. Der Backend-Server 630 kann beispielsweise über eine Kommunikationsverbindung 625 mit der Steuereinheit 611 der Fachanlage 610 kommunizieren. Zusätzlich oder alternativ kann der Backend-Server 630 über die Kommunikationsverbindung 625 mit der Steuereinheit des Messmoduls 620 kommunizieren. Darüber hinaus kann der Backend-Server 630 über eine Kommunikationsverbindung 635 mit dem Mobilgerät 640 kommunizieren. Bei den Kommunikationsverbindungen 625 und 645 kann es sich z.B. um jeweilige Internetverbindungen handeln, die beispielhaft auch streckenweise eine Übertragung in einem Mobilfunknetzwerk umfasst

Der beispielhaft dargestellte Benutzer 655 möchte eine Sendung 650 zum Versenden in die Fachanlage 610 einlagern. Zu diesem Zweck soll die Sendung 650 vor dem Einlagern in dem Messmodul 620 vermessen werden. Dies umfasst insbesondere das Bereitstellen einer Messinformation, welche zumindest ein Gewicht und/oder eine Größe der vom Benutzer 655 in das Messmodul 620 eingelegten Sendung 650 repräsentiert und wobei zumindest teilweise basierend auf der bereitgestellten Messinformation zumindest eine Versandoption für ein Versenden der Sendung 650 bestimmt wird.

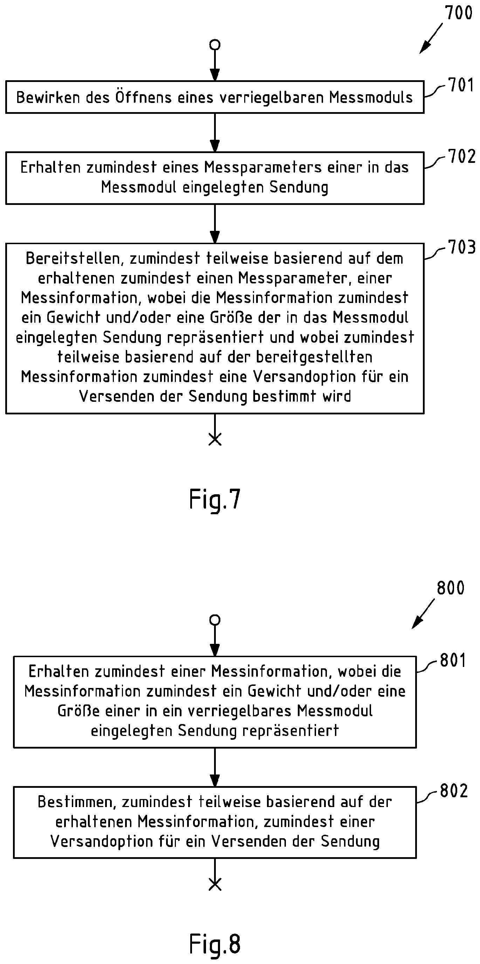

Fig. 7 zeigt ein Flussdiagramm einer beispielhaften Ausführungsform eines Verfahrens 700 gemäß dem ersten Aspekt der vorliegenden Offenbarung. Nachfolgend werden die Verfahrensschritte 701 bis 703 beispielhaft in Bezug auf das in Fig. 6 gezeigte System 6 beschrieben. Dabei wird beispielhaft angenommen, dass die Verfahrensschritte 701 bis 703 von einer Steuereinheit des Messmoduls 620 durchgeführt werden.

Schritt 701 umfasst ein Bewirken des Öffnens eines verriegelbaren Messmoduls.

Zum Beispiel steuert die Steuereinheit des Messmoduls 620 die Schlosssteuereinheit des Messmoduls 620 an, sodass die Schlosssteuereinheit die Tür des Fachs des Messmoduls 620 öffnet und dazu beispielsweise ein Schloss der Tür entriegelt. Nach dem Öffnen (z.B. nach dem Entriegeln) des Messmoduls 620 in Schritt 701 kann beispielsweise der Benutzer 655 die Sendung 650 in das geöffnete Fach des Messmoduls 620 einlegen. Dabei kann es sich zum Beispiel um eine Sendung handeln, welche im weiteren Verlauf versendet werden und hierzu in die Fachanlage 610 eingelagert werden soll. Nach dem Einlegen der Sendung 650 in das Messmodul 620 schließt der Benutzer 655 beispielsweise das Messmodul 620.

Zum Beispiel öffnet sich das Messmodul 620 in Schritt 701, wenn das Messmodul 620 eine Zugangsinformation erhält und das Messmodul 620 bestimmt, dass diese Zugangsinformation zum Öffnen des Messmoduls 620 berechtigt Eine solche Zugangsinformation kann beispielsweise von dem Mobilgerät 640 des Benutzers 655 an die Steuereinheit des Messmoduls 620 übermittelt werden. Die erhaltene Zugangsinformation kann beispielsweise im Rahmen eines Reservierungsvorgangs erzeugt werden.

Schritt 702 umfasst ein Erhalten zumindest eines Messparameters einer in das Messmodul eingelegten Sendung.

Nach dem Öffnen des Messmoduls 620 in Schritt 701 und nach dem Einlegen einer Sendung 650 in das geöffnete Messmodul 620 folgt ein Erhalten zumindest eines Messparameters der in das Messmodul 620 Sendung 650. Das Erhalten des zumindest einen Messparameters umfasst beispielsweise das Erfassen des zumindest einen Messparameters der Sendung 620 durch den zumindest einen Sensor des Messmoduls 620, während sich die Sendung 620 in dem Fach des Messmoduls 620 befindet Nach dem Erfassen wird der zumindest eine erfasste Messparameter beispielsweise an die Steuereinheit des Messmoduls 620 übertragen.

Der zumindest eine Sensor des Messmoduls 620 kann in einem Beispiel durch einen Gewichtsensor gegeben sein, wobei der Gewichtssensor Teil einer im Fach des Messmoduls 620 angeordneten elektronische Waage sein kann (z.B. der in Fig. 1b gezeigten Waage 14 im Fach 10 des Messmoduls 1). Beispielsweise ist eine solche Waage in den Boden des Fachs des Messmoduls 620 eingelassen, sodass das Gewicht der Sendung 650 erfasst wird. In diesem Beispiel zeigt der erfasste Messparameter der eingelegten Sendung 650 in Form eines elektrischen Signals der elektronischen Waage das Gewicht der eingelegten Sendung 650 an.

Alternativ oder zusätzlich zum einem Gewichtssensor kann das Messmodul 620 weitere Sensoren zum Erfassen eines Messparameters der Sendung 650 umfassen. Zum Beispiel umfasst das Messmodul 620 einen oder mehrere optische oder optoelektronische Sensoren, welche Information bezüglich der Größe der in das Fach des Messmoduls 620 eingelegten Sendung 650 erfassen. Dabei kann beispielsweise mittels eines Lichtsenders (z.B. eine Leuchtdiode oder einer Laserdiode) und eines Lichtempfängers (z.B. ein lichtempfindlicher Widerstand oder einer Fotodiode) eine Lichtschranke innerhalb des Fachs des Messmoduls 620 realisiert werden, sodass zum Beispiel eine Unterbrechung eines Lichtstrahls der Lichtschranke eine Größe der in das Fach eingelegten Sendung 650 anzeigt. Sind Lichtsender und Lichtempfänger beispielsweise auf einer bestimmten Höhe im Fach des Messmoduls 620 angeordnet, zeigt eine Unterbrechung des Lichtstrahls beispielsweise an, dass eine Höhe der eingelegten Sendung 650 mindestens so groß wie die Höhe ist, auf der Lichtsender und Lichtempfänger angeordnet sind. Der Messparameter der eingelegten Sendung 650 kann zum Beispiel ein Fotostrom des Lichtempfängers sein und eine untere Grenze der Höhe der eingelegten Sendung anzeigen.

In einem weiteren Beispiel kann das Messmodul 620 eine oder mehrere Kameras (z.B. die in Fig. 1b gezeigte Kamera 15 im Fach 10 des Messmoduls 1) umfassen, die jeweils ein oder mehrere Bilder (z.B. mit deren Bildinformationen als beispielhafte Messparameter) der in das Fach des Messmoduls 620 eingelegten Sendung 650 erfassen, wobei beispielsweise eine Auswertung des einen oder der mehreren Bilder ein Bestimmen einer Größe der in das Fach eingelegten Sendung 650 ermöglicht Weiterhin können zum Beispiel eine oder mehrere Kameras des Messmoduls 620 beispielsweise außerdem ein Postwertzeichen (z.B. eine Briefmarke, ein Freistempel und/oder Barcode) erfassen, welches sich auf der eingelegten Sendung 650 befindet, wobei basierend auf dem erfassten Postwertzeichen eine Frankierungsinformation der eingelegten Sendung 650 bestimmt werden kann (z.B. von der Steuereinheit des Messmoduls 620).

Beispielsweise kann ein im Rahmen von Schritt 702 ablaufender Messvorgang geschützt werden, indem das Messmodul 620 während des Messvorgangs verriegelt wird. Hierzu kann zum Beispiel die Steuereinheit des Messmoduls 620 nach Schritt 701 bestimmen, ob die Sendung 650 in das Messmodul eingelegt wurde und gegebenenfalls das Verriegeln des Messmoduls 620 bewirken, bis das Messmodul 620 nach dem Erhalt des Messparameters in Schritt 702 wieder entriegelt wird.

Weiterhin kann das Messmodul 620 nach dem Erhalten eines Messparameters in Schritt 702 verriegelt werden, wenn die Steuereinheit des Messmoduls 620 bestimmt, dass sich die Sendung 650 nicht mehr im Messmodul 620 befindet Hat zum Beispiel der Benutzer 655 nach dem Erhalten des zumindest einen Messparameter in Schritt 702 die zuvor eingelegte Sendung 650 wieder entnommen und wurde diese Entnahme (z.B. mittels der Sensorik des Messmoduls 620) beispielsweise von der Steuereinheit des Messmoduls 620 bestimmt (z.B. erfasst), kann ein Verriegeln des Messmoduls 620 bewirkt werden. Dies ermöglicht einen Schutz des Messmoduls 620 (z.B. der im Fach des Messmoduls angeordneten, vergleichsweise sensiblen Sensorik) beispielsweise vor Vandalismus, insbesondere im ungenutzten Zustand des Messmoduls 620.

Schritt 703 umfasst ein Bereitstellen, zumindest teilweise basierend auf dem erhaltenen zumindest einen Messparameter, einer Messinformation, wobei die Messinformation zumindest ein Gewicht und/oder eine Größe der in das Messmodul eingelegten Sendung repräsentiert und wobei zumindest teilweise basierend auf der bereitgestellten Messinformation zumindest eine Versandoption für ein Versenden der Sendung bestimmt wird.

Unter dem Bereitstellen von der Steuereinheit des Messmoduls 620 einer Messinformation zumindest teilweise basierend auf dem erhaltenen zumindest einen Messparameter soll beispielsweise verstanden werden, dass eine Messinformation zumindest teilweise basierend auf dem erhaltenen Messparameter der eingelegten Sendung 650 (z.B. von der Steuereinheit des Messmoduls 620) bestimmt wird und anschließend zum Beispiel für die Übertragung bereitgestellt wird. Eine solche Übertragung kann beispielsweise das Übertragen der Messinformation an die Steuereinheit 611 der Fachanlage 610 (welche die Messinformation an den Backend-Server 630 weiterleitet), an das Mobilgerät 640 (welches die Messinformation an den Backend-Server 630 weiterleitet) oder an den Backend-Server 630 umfassen. Dementsprechend kann Schritt 703 das Bestimmen der Messinformation zumindest teilweise basierend auf dem erhaltenen zumindest einen Messparameters und das anschließende Übertragen der Messinformation an den Backend-Server 630 umfassen.

Beispielhaft wird in Schritt 703 basierend auf einem anhand eines Gewichtssensors erfassten Messparameter, welcher Information über ein Gewicht der eingelegten Sendung 650 anzeigt, eine Messinformation bestimmt und bereitgestellt, wobei die Messinformation das Gewicht der Sendung 650 zu 2 kg anzeigt In einem anderen Beispiel wird in Schritt 703 basierend auf einem anhand eines optischen Sensors erfassten Messparameter, welcher Information über eine Größe der eingelegten Sendung 650 anzeigt, eine Messinformation bestimmt und bereitgestellt, wobei die Messinformation die Höhe der eingelegten Sendung 650 zu 35 cm anzeigt

An Schritt 703 anschließend wird zum Beispiel zumindest teilweise basierend auf der in Schritt 703 bereitgestellten Messinformation zumindest eine Versandoption für ein Versenden der Sendung 650 bestimmt. Dies soll beispielsweise so verstanden werden, dass die Messinformation von der Steuereinheit des Messmoduls 620 beispielsweise am Backend-Server 630 oder die eine Steuereinheit 611 einer Fachanlage 610 übertragen und dort erhalten wird. Nach dem Erhalten der Messinformation wird an dem Backend-Server 630 oder an der Steuereinheit der Fachanlage 611 zumindest eine Versandoption für ein Versenden der Sendung 650 zumindest teilweise basierend auf der bereitgestellten Messinformation bestimmt (siehe den nachfolgend beschriebenen Schritt 802 in dem in Fig. 8 gezeigten Flussdiagramm 800).

Fig. 8 zeigt ein Flussdiagramm einer beispielhaften Ausführungsform eines Verfahrens 800 gemäß dem ersten Aspekt der vorliegenden Offenbarung. Nachfolgend werden die Verfahrensschritte 801 und 802 beispielhaft in Bezug auf das in Fig. 6 gezeigte System 6 beschrieben. Dabei wird beispielhaft angenommen, dass die Verfahrensschritte 801 und 802 von dem Backend-Server 630 durchgeführt werden.

Schritt 801 umfasst ein Erhalten zumindest einer Messinformation, wobei die Messinformation zumindest ein Gewicht und/oder eine Größe einer in ein verriegelbares Messmodul eingelegten Sendung repräsentiert

Zum Beispiel wird in Schritt 801 vom Backend-Server 630 zumindest jene Messinformation erhalten, die in dem oben beschriebenen Schritt 703 von der Steuereinheit des Messmoduls 620 an den Backend-Server 630 übertragen wird. Dieses Übertragen und Erhalten der Messinformation in Schritt 801 ist auf verschiedenen Übertragungswegen möglich, wobei diese Übertragungswege von der technischen Ausstattung des Messmoduls 620 abhängen können.

Gemäß einem Beispiel kann die Messinformation von der Steuereinheit des Messmoduls 620 unmittelbar (z.B. ohne das Mobilgerät 640 oder die Steuereinheit 611 der Fachanlage 610 als zusätzliche Instanz im Übertragungsweg) an den Backend-Server 630 übertragen werden. Vorteilhafterweise kann das Messmodul 620 auf diese Weise eigenständig die bestimmte Messinformation an den Backend-Server 630 übertragen, ohne dabei beispielsweise auf eine Verbindung zur Datenübertragung an die Fachanlage 610 oder eine weitere Vorrichtung angewiesen zu sein. Gemäß einem weiteren Beispiel kann die Messinformation von der Steuereinheit des Messmoduls 620 zunächst an die Steuereinheit 611 der Fachanlage 610 übertragen werden, wobei die übertragene Messinformation anschließend von der Steuereinheit 611 der Fachanlage 610 an den Backend-Server 630 weitergeleitet wird. Vorteilhafterweise kann das Messmodul 620 beispielsweise kostengünstiger ausgestaltet sein und lediglich mit einer kostengünstigeren Kommunikationsschnittstelle ausgestattet sein, welche für eine Kommunikation mit der Fachanlage 610 ausreichend ist Gemäß einem weiteren Beispiel kann die Messinformation von der Steuereinheit des Messmoduls 620 zunächst an das Mobilgerät 640 übertragen werden, wobei die übertragene Messinformation anschließend von dem Mobilgerät 640 an den Backend-Server 630 weitergeleitet wird. Vorteilhafterweise kann das Messmodul 620 auf diese Weise die bestimmte Messinformation an den Backend-Server 630 übertragen, ohne dabei beispielsweise auf eine Verbindung zur Datenübertragung an die Fachanlage 610 angewiesen zu sein. Außerdem kann das Messmodul 620 auf diese Weise zugleich kostengünstiger ausgestaltet sein und lediglich mit einer kostengünstigeren Kommunikationsschnittstelle ausgestattet sein, welche für eine Nahbereichs-Kommunikation mit dem Mobilgerät 640 ausreichend ist.

Zusätzlich zu der in Schritt 801 erhaltenen zumindest einen Messinformation kann beispielsweise eine weitere Messinformation am Backend-Server 630 erhalten werden, welche zum Beispiel anders als die in Schritt 801 zumindest eine erhaltene Messinformation nicht von der Steuereinheit des Messmoduls 620 bereitgestellt und an den Backend-Server 630 übertragen wird, sondern an der Steuereinheit 611 der Fachanlage 610 bestimmt und bereitgestellt wird anschließend an den Backend-Server 630 übertragen wird. Am Backend-Server 630 kann dann basierend auf beiden erhaltenen Messinformationen zumindest eine Versandoption wie nachfolgend in Schritt 802 beschrieben bestimmt werden. Zum Beispiel repräsentiert die zumindest eine in Schritt 801 erhaltene Messinformation ein Gewicht der Sendung 650 und die weitere erhaltene Messinformation repräsentiert eine Größe der Sendung 650. Dabei kann die weitere Messinformation beispielsweise zumindest teilweise basierend auf zumindest einem Messparameter der Sendung 650 bestimmt werden, welcher von der Größe der Sendung 650 abhängt und von einer Kameraeinheit der Fachanlage 610 (z.B. der in Fig. 2 gezeigten Kameraeinheit 24 der Fachanlage 2) erfasst wird. Beispielsweise kann der Benutzer 655 die einzulagernde Sendung 650 vor dem Einlegen der Sendung 650 in das Messmodul 620 in das Bildfeld der Kameraeinheit halten, sodass die Kameraeinheit einen oder mehrere weitere Messparameter der Sendung 650 erfasst und darauf basierend eine weitere Messinformation, welche eine Größe der Sendung 650 repräsentiert, zum Beispiel durch die Steuereinheit der Fachanlage 610 bestimmt werden kann. Anschließend legt der Benutzer 655 die Sendung 650 beispielsweise in das Messmodul 620 ein, sodass wie oben für Schritt 702 beschrieben ein Messparameter der Sendung 650 erhalten werden kann. In diesem Fall kann vorteilhafterweise das Messmodul 620 dazu genutzt werden, das Gewicht der Sendung 650 zu ermitteln, während eine an der Fachanlage 610 angebrachte Kameraeinheit genutzt werden kann, die Größe der Sendung 650 zu ermitteln. Somit kann die beispielsweise auch zu anderen Zwecken an der Fachanlage 610 vorhandene Kameraeinheit für die Größenbestimmung genutzt werden, sodass das Messmodul 620 keine eigene Kameraeinheit für die Größenbestimmung erfordert und beispielsweise nur mit einer Waage ausgestattet sein kann, um das Gewicht der Sendung 650 zu ermitteln.

Schritt 802 umfasst ein Bestimmen, zumindest teilweise basierend auf der erhaltenen Messinformation, zumindest einer Versandoption für ein Versenden der Sendung.

In einem Beispiel können basierend auf der in Schritt 801 erhaltenen Messinformation, wonach das Gewicht einer Sendung 650 zu 2 kg und/oder eine Höhe der Sendung 650 von 35 cm beträgt, am Backend-Server 630 die Versandoptionen "Päckchen" oder "Paket" bestimmt werden, wenn für die Sendung 650 dieses Gewichts und/oder dieser Größe solche zwei Versandoptionen für das Versenden angeboten werden. Diese Versandoptionen unterscheiden sich beispielsweise in einen oder mehreren Aspekten wie eine verfügbare Sendungsverfolgung oder Transporthaftung. Abhängig oder unabhängig von derartigen beispielhaften Versandoptionen können weitere Versandoptionen für das Versenden der Sendung bestimmt werden, beispielsweise eine optionale Transportversicherung, Versendung als Sperrgut, Bezahlung per Nachnahme oder klimaneutrale Versendung.

Wie in Schritt 801 erwähnt kann in Schritt 802 die zumindest eine Versandoption basierend auf der in Schritt 801 erhaltenen Messinformation und zusätzlich auf einer oder mehreren weiteren Messinformationen bestimmt werden.

Zum Beispiel kann im Anschluss an das Bestimmen in Schritt 802 der zumindest einen Versandoption zumindest teilweise basierend auf der zumindest einen Versandoption und einer Benutzereingabe des Benutzers 655 am Mobilgerät 640 oder an der Fachanlage 610 eine Versandinformation für das Versenden der Sendung 650 bestimmt werden. Beispielsweise kann der Benutzer 655 eine von zwei bestimmten Versandoptionen (z.B. "Päckchen" oder "Paket") auswählen und somit eine Versandinformation bestimmen, wobei die Versandinformation angibt, dass die Sendung 650 als "Päckchen" oder als "Paket" zu versenden ist Hierzu werden die zumindest eine Versandoption beispielsweise vom Backend-Server 630 an das Mobilgerät 640 oder an die Fachanlage 610 übertragen und die bestimmte Versandinformation vom Mobilgerät 640 beziehungsweise von der Fachanlage 610 an den Backend-Server zurückübertragen. Die Versandinformation zeigt dabei beispielsweise die ausgewählte Versandinformation an und weiterhin einen Versandkostenbetrag der ausgewählten Versandoption an, wobei dieser Versandkostenbetrag der ausgewählten Versandoption für das Versenden der Sendung gemäß der ausgewählten Versandoption fällig wird. In einem weiteren Bespiel kann basierend auf dem Versandkostenbetrag der ausgewählten Versandoption und einer zum Beispiel in Schritt 702 am Messmodul 620 erhaltenen Frankierungsinformation (welche anschließend an den Backend-Server 630 übertragen wird) bestimmt werden, ob die Sendung 650 ausreichend frankiert ist

Anschließend kann beispielsweise der Backend-Server 630 die Versandinformation an das Messmodul 620 übertragen, an welcher eine Versandbeschriftung (z.B. in Form eines Drucks auf die Sendung 620 oder eines ausgedruckten Etiketts, welches der Benutzer 655 auf die Sendung 650 aufbringt) zumindest teilweise basierend auf der Versandinformation ausgegeben wird. Daraufhin kann das Messmodul 620 die Einlagerung der Sendung 650 bewirken, beispielsweise indem das Messmodul 620 die Sendung 650 in die Fachanlage 610 transportiert oder indem sich das Messmodul 620 öffnet, sodass der Benutzer 655 die Sendung 650 entnehmen und in ein Fach der Fachanlage 610 einlegen kann.

Vorteilhafterweise ermöglicht das in den Flussdiagrammen 7 und 8 beschriebene Vorgehen eine Berücksichtigung eines Gewichts und/oder einer Größe der Sendung 650 für die Bestimmung einer oder mehrere Versandoptionen, die für das Versenden der Sendung 650 infrage kommen. Insbesondere ermöglicht der Einsatz eines verriegelbaren Messmoduls 620 einen sicheren Außenbetrieb mit Schutz vor Vandalismus und Umwelteinflüssen. Dies betrifft beispielsweise einen Schutz des Messmoduls 620 (z.B. der im Fach des Messmoduls 620 angeordneten, vergleichsweise sensiblen Sensorik) vor mutwilliger Beschädigung im ungenutzten Zustand des Messmoduls. Das Messmodul 620 wird außerdem vor einer Manipulation des Messvorgangs zur Bestimmung einer Messinformation geschützt werden. Indem das Messmodul 620 als Teil der Fachanlage 610 oder in direkter Nähe einer Fachanlage 610 betrieben wird, wird dem Benutzer 655 eine komfortable Ermittlung der möglichen Versandoptionen für die zu versendende Sendung 650 ermöglicht, bevor der Benutzer 655 die Sendung 650 in die Fachanlage 610 einlagert

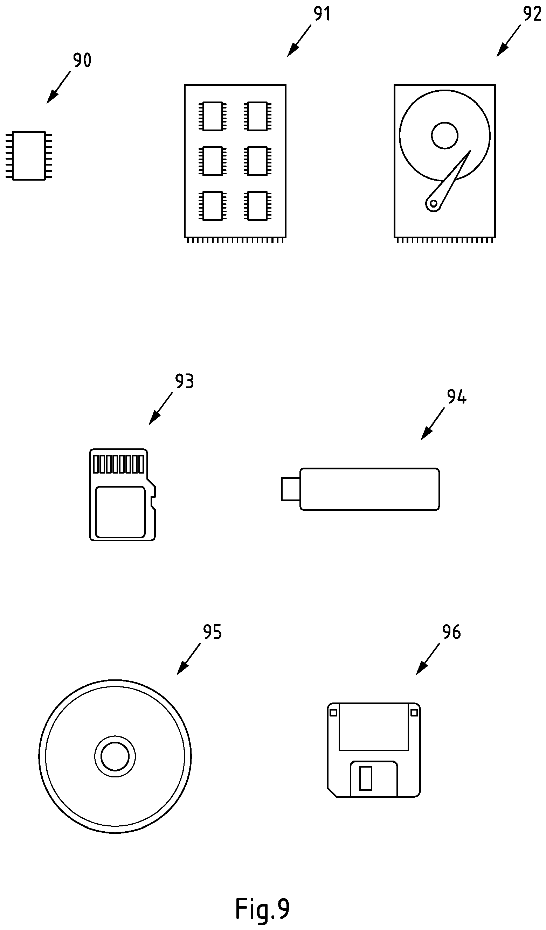

Fig. 9 zeigt beispielhafte Ausführungsformen von Speichermedien, auf denen zum Beispiel ein Computerprogramm gemäß den verschiedenen Aspekten der vorliegenden Offenbarung gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 30 der Fig. 3) sein, beispielsweise ein (nicht-flüchtiger oder flüchtiger) Programmspeicher des Prozessors oder ein Teil davon (z.B. Speicher 31 in Fig. 3). Ausführungsbeispiele eines Speichermediums sind ein Flash-Speicher 90, eine SSD-Festplatte 91, eine magnetische Festplatte 92, eine Speicherkarte 93, ein Memory Stick 95 (z.B. ein USB-Stick), eine CD-ROM oder DVD 95 oder eine Diskette 96.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals
- sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar
- soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden Ausführungsbeispiele werden als Teil der vorliegenden Offenbarung offenbart:

### Ausführungsbeispiel 1:

Ein Verfahren, beispielsweise ausgeführt von einer ersten Vorrichtung, das Verfahren umfassend:
- Bewirken des Öffnens eines verriegelbaren Messmoduls;
- Erhalten zumindest eines Messparameters einer in das Messmodul eingelegten Sendung; und
- Bereitstellen, zumindest teilweise basierend auf dem erhaltenen zumindest einen Messparameter, einer Messinformation, wobei die Messinformation zumindest ein Gewicht und/oder eine Größe der in das Messmodul eingelegten Sendung repräsentiert und wobei zumindest teilweise basierend auf der bereitgestellten Messinformation zumindest eine Versandoption für ein Versenden der Sendung bestimmt wird.

### Ausführungsbeispiel 2:

Das Verfahren gemäß Ausführungsbeispiel 1, wobei das Verfahren ferner umfasst:
- Bestimmen, nach dem Bewirken des Öffnens des Messmoduls, ob die Sendung in das Messmodul eingelegt wurde;
- Bewirken des Verriegelns des Messmoduls, wenn bestimmt wird, dass die Sendung in das Messmodul eingelegt wurde; und
- Bewirken des Entriegelns des Messmoduls, nachdem der zumindest eine Messparameter der Sendung erhalten wurde.

### Ausführungsbeispiel 3:

Das Verfahren gemäß Ausführungsbeispiel 1 oder 2, wobei das Öffnen des verriegelbaren Messmoduls bewirkt wird, wenn bestimmt wird, dass eine erhaltene Zugangsinformation zum Öffnen des Messmoduls berechtigt

### Ausführungsbeispiel 4:

Das Verfahren gemäß einem der Ausführungsbeispiele 1 bis 3, wobei das Verfahren weiter umfasst:
- Bestimmen, nachdem der zumindest eine Messparameter erhalten wurde, ob sich eine Sendung in dem Messmodul befindet; und
- wenn bestimmt wird, dass sich keine Sendung in dem Messmodul befindet, Bewirken des Verriegelns des Messmoduls.

### Ausführungsbeispiel 5:

Das Verfahren gemäß einem der Ausführungsbeispiele 1 bis 4, wobei die zumindest eine Versandoption zumindest teilweise basierend auf der bereitgestellten Messinformation an einem Backend-Server bestimmt wird, und wobei das Bereitstellen der Messinformation weiter umfasst:
- Übertragen der Messinformation an den Backend-Server; oder
- Übertragen der Messinformation an ein Mobilgerät, wobei die übertragene Messinformation von dem Mobilgerät an den Backend-Server weitergeleitet wird; oder
- Übertragen der Messinformation an eine Fachanlage, wobei die übertragene Messinformation von der Fachanlage an den Backend-Server weitergeleitet wird.

### Ausführungsbeispiel 6:

Das Verfahren gemäß einem der Ausführungsbeispiele 1 bis 5, wobei zumindest teilweise basierend auf der zumindest einen Versandoption und einer Benutzereingabe eine Versandinformation für das Versenden der Sendung bestimmt wird.

### Ausführungsbeispiel 7:

Das Verfahren gemäß Ausführungsbeispiel 6, wobei das Verfahren weiter umfasst:
- Bewirken des Bereitstellens einer Versandbeschriftung, wobei die Versandbeschriftung zumindest teilweise auf der Versandinformation basiert

### Ausführungsbeispiel 8:

Das Verfahren gemäß der Ausführungsbeispiele 6 und 7, wobei das Verfahren weiter umfasst:
- Bewirken des Verpackens der Sendung zumindest teilweise basierend auf der bereitgestellten Messinformation.

### Ausführungsbeispiel 9:

Das Verfahren gemäß einem der Ausführungsbeispiele 1 bis 8, wobei das Verfahren weiter umfasst:
- Erhalten einer Frankierungsinformation der eingelegten Sendung, wobei die Frankierungsinformation eine Frankierung der eingelegten Sendung anzeigt

### Ausführungsbeispiel 10:

Das Verfahren gemäß einem der Ausführungsbeispiele 1 bis 9, wobei das Verfahren weiter umfasst:
- Bewirken, nach dem Bereitstellen der Messinformation, des Einlagerns der Sendung in die Fachanlage für das Versenden der Sendung gemäß der Versandinformation.

### Ausführungsbeispiel 11:

Das Verfahren gemäß Ausführungsbeispiel 10, wobei das Bewirken des Einlagerns der Sendung weiter umfasst:
- Bewirken des Transportierens der Sendung aus dem Messmodul in die Fachanlage; oder
- Bewirken des Öffnens des Messmoduls, wobei die Sendung aus dem geöffneten Messmodul entnommen und in ein zumindest teilweise basierend auf der bereitgestellten Messinformation bestimmtes Fach der Fachanlage eingelegt wird.

### Ausführungsbeispiel 12:

Das Verfahren gemäß einem der Ausführungsbeispiele 10 und 11, wobei das Bewirken des Einlagerns der Sendung weiter umfasst:
- wenn zumindest teilweise basierend auf der bereitgestellten Messinformation bestimmt wird, dass die Sendung eine Briefsendung ist, Bewirken des Transportierens der Sendung aus dem Messmodul in die Fachanlage; und
- wenn zumindest teilweise basierend auf der bereitgestellten Messinformation bestimmt wird, dass die Sendung eine Paketsendung ist, Bewirken des Öffnens des Messmoduls, wobei die Sendung aus dem Messmodul entnommen und in ein zumindest teilweise basierend auf der bereitgestellten Messinformation bestimmtes Fach der Fachanlage eingelegt wird.

### Ausführungsbeispiel 13:

Ein Verfahren umfassend:
- Erhalten zumindest einer Messinformation, wobei die Messinformation zumindest ein Gewicht und/oder eine Größe einer in ein verriegelbares Messmodul eingelegten Sendung repräsentiert; und
- Bestimmen, zumindest teilweise basierend auf der erhaltenen Messinformation, zumindest einer Versandoption für ein Versenden der Sendung.

### Ausführungsbeispiel 14:

Das Verfahren gemäß Ausführungsbeispiel 13, wobei die erhaltene zumindest eine Messinformation von dem Messmodul, von einem Mobilgerät oder von einer Fachanlage erhalten wird und vor dem Erhalten an dem Messmodul bereitgestellt wird.

### Ausführungsbeispiel 15:

Das Verfahren gemäß einem der Ausführungsbeispiele 13 und 14, wobei das Verfahren weiter umfasst:
- Erhalten einer weiteren Messinformation, wobei die weitere Messinformation zumindest eine Größe der in das Messmodul eingelegten Sendung repräsentiert, wobei die weitere Messinformation zumindest teilweise auf zumindest einem weiteren Messparameter der Sendung basiert, wobei der zumindest eine weitere Messparameter der Sendung von einer Kameraeinheit der Fachanlage erfasst wird und wobei das Bestimmen zumindest einer Versandoption für ein Versenden der Sendung zumindest teilweise auf der zumindest einen Messinformation und der weiteren Messinformation basiert.

### Ausführungsbeispiel 16:

Das Verfahren gemäß einem der Ausführungsbeispiele 13 bis 15, wobei das Verfahren weiter umfasst:
- Bestimmen, zumindest teilweise basierend auf der zumindest einen Versandoption und einer Benutzereingabe, einer Versandinformation für das Versenden der Sendung.

### Ausführungsbeispiel 17:

Das Verfahren gemäß Ausführungsbeispiel 16, wobei die Versandinformation zumindest eine aus der zumindest einen Versandoption ausgewählte Versandoption anzeigt und weiterhin einen Versandkostenbetrag der zumindest einen ausgewählten Versandoption anzeigt und wobei das Verfahren insbesondere weiter umfasst:
- Bestimmen, zumindest teilweise basierend auf einer von dem Messmodul erhaltenen Frankierungsinformation und dem Versandkostenbetrag der ausgewählten Versandoption, ob die Sendung ausreichend frankiert ist

### Ausführungsbeispiel 18:

Das Verfahren gemäß einem der Ausführungsbeispiele 13 bis 17, wobei das Verfahren weiter umfasst:
- Bestimmen, zumindest teilweise basierend auf der erhaltenen zumindest einen Messinformation, eines Fachs der Fachanlage; und
- Bewirken des Öffnens des bestimmten Fachs der Fachanlage.

### Ausführungsbeispiel 19:

Das Verfahren gemäß einem der Ausführungsbeispiele 1 bis 18, wobei das Messmodul zumindest einen Sensor für ein Erfassen des zumindest einen Messparameters der Sendung umfasst und wobei der zumindest eine Messparameter der Sendung von dem zumindest einen Sensor erfasst wird, während sich die Sendung in dem Messmodul befindet.

### Ausführungsbeispiel 20:

Das Verfahren gemäß einem der Ausführungsbeispiele 1 bis 19, wobei das Messmodul ein Teil der Fachanlage ist.

### Ausführungsbeispiel 21:

Ein Computerprogramm, umfassend Programmanweisungen, die einen Prozessor zur Ausführung und/oder Steuerung des Verfahrens gemäß einem der Ausführungsbeispiele 1 bis 20 veranlassen, wenn das Computerprogramm auf dem Prozessor läuft.

### Ausführungsbeispiel 22:

Eine Vorrichtung, eingerichtet zur Ausführung und/oder Steuerung des Verfahrens gemäß einem der Ausführungsbeispiele 1 bis 12 sowie 19 und 20 oder umfassend jeweilige Mittel zur Ausführung und/oder Steuerung der Schritte des Verfahrens gemäß einem der Ausführungsbeispiele 1 bis 12 sowie 19 und 20, wobei die Vorrichtung insbesondere eine Steuereinheit des Messmoduls ist

### Ausführungsbeispiel 23:

Eine Vorrichtung gemäß Ausführungsbeispiel 22, wobei die Vorrichtung eine Steuereinheit des Messmoduls ist.

### Ausführungsbeispiel 24:

Die Vorrichtung, eingerichtet zur Ausführung und/oder Steuerung des Verfahrens gemäß einem der Ausführungsbeispiele 13 bis 20 oder umfassend jeweilige Mittel zur Ausführung und/oder Steuerung der Schritte des Verfahrens gemäß einem der Ausführungsbeispiele 13 bis 20, wobei die Vorrichtung insbesondere eine Steuereinheit der Fachanlage ist oder der Backend-Server ist

### Ausführungsbeispiel 25:

Eine Vorrichtung gemäß Ausführungsbeispiel 24, wobei die Vorrichtung eine Steuereinheit der Fachanlage ist oder der Backend-Server ist

### Ausführungsbeispiel 26:

Ein System umfassend die Vorrichtung gemäß Ausführungsbeispiel 22 und die Vorrichtung gemäß Ausführungsbeispiel 24.

## Patentansprüche

1. Verfahren (700) umfassend:
- Bewirken des Öffnens (701) eines verriegelbaren Messmoduls (1;23;620);
- Erhalten (702) zumindest eines Messparameters einer in das Messmodul (1;23;620) eingelegten Sendung (11;650); und
- Bereitstellen (703), zumindest teilweise basierend auf dem erhaltenen zumindest einen Messparameter, einer Messinformation, wobei die Messinformation zumindest ein Gewicht und/oder eine Größe der in das Messmodul (1;23;620) eingelegten Sendung (11;650) repräsentiert und wobei zumindest teilweise basierend auf der bereitgestellten Messinformation zumindest eine Versandoption für ein Versenden der Sendung (11;650) bestimmt wird.

2. Verfahren (700) gemäß Anspruch 1, wobei das Verfahren (700) weiter umfasst:
- Bestimmen, nach dem Bewirken des Öffnens des Messmoduls (1;23;620), ob die Sendung in das Messmodul (1;23;620) eingelegt wurde;
- Bewirken des Verriegelns des Messmoduls (1;23;620), wenn bestimmt wird, dass die Sendung (11;650) in das Messmodul (1;23;620) eingelegt wurde; und
- Bewirken des Entriegelns des Messmoduls (1;23;620), nachdem der zumindest eine Messparameter der Sendung (11;650) erhalten wurde, und wobei das Öffnen des verriegelbaren Messmoduls (1;23;620) insbesondere bewirkt wird, wenn bestimmt wird, dass eine erhaltene Zugangsinformation zum Öffnen des Messmoduls (1;23;620) berechtigt.

3. Verfahren (700) gemäß einem der Ansprüche 1 bis 2, wobei das Verfahren (700) weiter umfasst:
- Bestimmen, nachdem der zumindest eine Messparameter erhalten wurde, ob sich eine Sendung (11;650) in dem Messmodul (1;23;620) befindet; und
- wenn bestimmt wird, dass sich keine Sendung in dem Messmodul (1;23;620) befindet, Bewirken des Verriegelns des Messmoduls (1;23;620).

4. Verfahren (700) gemäß einem der Ansprüche 1 bis 3, wobei die zumindest eine Versandoption zumindest teilweise basierend auf der bereitgestellten Messinformation an einem Backend-Server (630) bestimmt wird, und wobei das Bereitstellen der Messinformation weiter umfasst:
- Übertragen der Messinformation an den Backend-Server (630); oder
- Übertragen der Messinformation an ein Mobilgerät, wobei die übertragene Messinformation von dem Mobilgerät an den Backend-Server (630) weitergeleitet wird; oder
- Übertragen der Messinformation an eine Fachanlage (2;610), wobei die übertragene Messinformation von der Fachanlage (2;610) an den Backend-Server (630) weitergeleitet wird.

5. Verfahren (700) gemäß einem der Ansprüche 1 bis 4, wobei zumindest teilweise basierend auf der zumindest einen Versandoption und einer Benutzereingabe eine Versandinformation für das Versenden der Sendung (11;650) bestimmt wird, wobei das Verfahren (700) insbesondere weiter umfasst:
- Bewirken des Bereitstellens einer Versandbeschriftung, wobei die Versandbeschriftung zumindest teilweise auf der Versandinformation basiert

6. Verfahren (700) gemäß einem der Ansprüche 1 bis 5, wobei das Verfahren (700) weiter umfasst:
- Bewirken des Verpackens der Sendung (11;650) zumindest teilweise basierend auf der bereitgestellten Messinformation; und/oder
- Erhalten einer Frankierungsinformation der eingelegten Sendung (11;650), wobei die Frankierungsinformation eine Frankierung der eingelegten Sendung (11;650) anzeigt; und/oder
- Bewirken, nach dem Bereitstellen der Messinformation, des Einlagerns der Sendung (11;650) in die Fachanlage (2;610) für das Versenden der Sendung gemäß der Versandinformation.

7. Verfahren (700) gemäß Anspruch 6, wobei das Bewirken des Einlagerns der Sendung weiter umfasst:
- Bewirken des Transportierens der Sendung (11;650) aus dem Messmodul (1;23;620) in die Fachanlage (2;610); oder
- Bewirken des Öffnens des Messmoduls (1;23;620), wobei die Sendung (11;650) aus dem geöffneten Messmodul (1;23;620) entnommen und in ein zumindest teilweise basierend auf der bereitgestellten Messinformation bestimmtes Fach der Fachanlage (2;610) eingelegt wird, und wobei das Bewirken des Einlagerns der Sendung (11;650) insbesondere weiter umfasst:
- wenn zumindest teilweise basierend auf der bereitgestellten Messinformation bestimmt wird, dass die Sendung (11;650) eine Briefsendung ist, Bewirken des Transportierens der Sendung (11;650) aus dem Messmodul (1;23;620) in die Fachanlage (2;610); und
- wenn zumindest teilweise basierend auf der bereitgestellten Messinformation bestimmt wird, dass die Sendung (11;650) eine Paketsendung ist, Bewirken des Öffnens des Messmoduls (1;23;620), wobei die Sendung (11;650) aus dem Messmodul (1;23;620) entnommen und in ein zumindest teilweise basierend auf der bereitgestellten Messinformation bestimmtes Fach der Fachanlage (2;610) eingelegt wird.

8. Verfahren (800) umfassend:
- Erhalten (801) zumindest einer Messinformation, wobei die Messinformation zumindest ein Gewicht und/oder eine Größe einer in ein verriegelbares Messmodul (1;23;620) eingelegten Sendung (11;650) repräsentiert; und
- Bestimmen (802), zumindest teilweise basierend auf der erhaltenen Messinformation, zumindest einer Versandoption für ein Versenden der Sendung (11;650).

9. Verfahren (800) gemäß Anspruch 8, wobei die erhaltene zumindest eine Messinformation von dem Messmodul (1;23;620), von einem Mobilgerät oder von einer Fachanlage (2;610) erhalten wird und vor dem Erhalten an dem Messmodul (1;23;620) bereitgestellt wird.

10. Verfahren (800) gemäß einem der Ansprüche 8 und 9, wobei das Verfahren (800) weiter umfasst:
- Erhalten einer weiteren Messinformation, wobei die weitere Messinformation zumindest eine Größe der in das Messmodul eingelegten Sendung (11;650) repräsentiert, wobei die weitere Messinformation zumindest teilweise auf zumindest einem weiteren Messparameter der Sendung basiert, wobei der zumindest eine weitere Messparameter der Sendung (11;650) von einer Kameraeinheit (24) der Fachanlage erfasst wird und wobei das Bestimmen zumindest einer Versandoption für ein Versenden der Sendung (11;650) zumindest teilweise auf der zumindest einen Messinformation und der weiteren Messinformation basiert.

11. Verfahren (800) gemäß einem der Ansprüche 8 bis 10, wobei das Verfahren (800) weiter umfasst:
- Bestimmen, zumindest teilweise basierend auf der zumindest einen Versandoption und einer Benutzereingabe, einer Versandinformation für das Versenden der Sendung (11;650), wobei die Versandinformation insbesondere zumindest eine aus der zumindest einen Versandoption ausgewählte Versandoption anzeigt und weiterhin insbesondere einen Versandkostenbetrag der zumindest einen ausgewählten Versandoption anzeigt und wobei das Verfahren (800) insbesondere weiter umfasst:
- Bestimmen, zumindest teilweise basierend auf einer von dem Messmodul (1;23;620) erhaltenen Frankierungsinformation und dem Versandkostenbetrag der ausgewählten Versandoption, ob die Sendung (11;650) ausreichend frankiert ist

12. Verfahren (800) gemäß einem der Ansprüche 8 bis 11, wobei das Verfahren (800) weiter umfasst:
- Bestimmen, zumindest teilweise basierend auf der erhaltenen zumindest einen Messinformation, eines Fachs der Fachanlage (2;610); und
- Bewirken des Öffnens des bestimmten Fachs der Fachanlage (2;610).

13. Verfahren (700;800) gemäß einem der Ansprüche 1 bis 12, wobei das Messmodul (1;23;620) zumindest einen Sensor für ein Erfassen des zumindest einen Messparameters der Sendung (11;650) umfasst und wobei der zumindest eine Messparameter der Sendung (11; 650) von dem zumindest einen Sensor erfasst wird, während sich die Sendung in dem Messmodul (1;23;620) befindet, und wobei das Messmodul (1;23;620) insbesondere ein Teil der Fachanlage (2;610) ist

14. Vorrichtung (3), eingerichtet zur Ausführung und/oder Steuerung des Verfahrens (700) gemäß einem der Ansprüche 1 bis 7 und 13 oder umfassend jeweilige Mittel zur Ausführung und/oder Steuerung der Schritte des Verfahrens (800) gemäß einem der Ansprüche 1 bis 7 und 13, wobei die Vorrichtung insbesondere eine Steuereinheit des Messmoduls (1;23;620) ist.

15. Vorrichtung (4;5), eingerichtet zur Ausführung und/oder Steuerung des Verfahrens (800) gemäß einem der Ansprüche 8 bis 13 oder umfassend jeweilige Mittel zur Ausführung und/oder Steuerung der Schritte des Verfahrens (800) gemäß einem der Ansprüche 8 bis 13, wobei die Vorrichtung insbesondere eine Steuereinheit der Fachanlage (2;610) ist oder der Backend-Server (630) ist
